(19) Europäisches Patentamt
European Patent Office
Office européen des brevets

(11) **EP 1 864 886 A2**

(12) **EUROPEAN PATENT APPLICATION**

(43) Date of publication:
**12.12.2007 Bulletin 2007/50**

(51) Int Cl.:
***B62D 5/04*** *(2006.01)*

(21) Application number: **07011145.5**

(22) Date of filing: **06.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **07.06.2006 JP 2006158806**
**21.06.2006 JP 2006171745**
**26.06.2006 JP 2006175384**
**28.07.2006 JP 2006206885**
**31.07.2006 JP 2006208942**
**31.07.2006 JP 2006208943**

(71) Applicant: **NSK Ltd.**
**Tokyo 141-8560 (JP)**

(72) Inventors:
• **Suehiro, Kaname**
**Maebashi-shi**
**Gunma 371-8527 (JP)**
• **Endo, Shuji**
**Maebashi-shi**
**Gunma 371-8527 (JP)**
• **Kobayashi, Hideyuki**
**Maebashi-shi**
**Gunma 371-8527 (JP)**

(74) Representative: **Grünecker, Kinkeldey,**
**Stockmair & Schwanhäusser**
**Anwaltssozietät**
**Maximilianstrasse 58**
**80538 München (DE)**

(54) **Electric power steering apparatus**

(57) There is provided an electric power steering apparatus having an electric motor 12 for generating a steering assist torque to a steering mechanism and a motor control part 24 for controlling the electric motor 12 by a pulse-width modulating signal in accordance with a current command value corresponding to a steering torque. The motor control part 24 has a motor torque detection part 67 detecting a motor torque, a motor torque change rate detection part 68 calculating a motor torque change rate, and a duty ratio limiting part 64 fixing a duty ratio of the pulse-width modulating signal to a predetermined value for limiting a torque transmitted to a torque transmitting member disposed between a steering shaft of a steering mechanism and a steering road wheel when a calculated torque change rate is not less than a threshold value for judging a steering limit position.

*FIG. 1*

EP 1 864 886 A2

## Description

BACKGROUND OF THE INVENTION

1. Field of the Invention

The present invention relates to an electric power steering apparatus provided with a current command value calculation part that calculates current command value on the basis of a steering torque, an electric motor that applies a steering assist force on a steering mechanism, and a motor control part that controls the electric motor on the basis of the current command value.

2. Description of Related Art

In a known steering apparatus, there has been widely used an electric power steering apparatus for transmitting a steering assist force to a steering mechanism by driving an electric motor in accordance with a steering torque generated when a driver steers a steering wheel.

Generally, in the steering mechanism, when the steering wheel is continuously steered left or right from its neutral position and a manipulation amount of the steering wheel reaches its maximum steering angle corresponding to the maximum manipulation amount, the steering wheel reaches its steering limit position in which a steering can not be performed any more because the steering mechanism is brought into contact with a mechanical stopper. Such a state of reaching the steering limit position in which the steering mechanism is brought into contact with the mechanical stopper is called as an end contact.

When the steering wheel is quickly manipulated, that is, a steering speed is large, the steering assist force generated by the electric power steering apparatus becomes large and an impact force occurring at the time of the end contact also becomes large, thereby deteriorating a durability of the steering mechanism or giving the driver a bad feeling at the time of manipulating the steering wheel.

For this reason, among electric power steering apparatuses for alleviating a shock at the time of the end contact, there has been known an electric power steering apparatus which includes an unloader compensator for reducing the steering assist torque of the electric motor when a steering angle exceeds a predetermined steering angle in the proximity of the maximum steering angle so that a reducing amount of the steering assist torque is increased as the steering speed increases (a first related art) (for example, see Japanese Patent Unexamined Publication JP-A-2001-253356).

Additionally, there has been known an electric power steering apparatus which includes:

attenuating means for attenuating a driving force of the electric motor when it is judged that the steering wheel approaches a predetermined maximum steering angle and exceeds an attenuation starting steering angle and attenuation starting steering angle setting means for setting the attenuation starting steering angle in correspondence to a load of the steering wheel and the steering speed of the steering wheel. (a second related art)(for example, see Japanese Patent Unexamined Publication JP-A-2001-30933).

Incidentally, since the known apparatus disclosed in JP-A-2001-253356 is configured to increase the reducing amount of the steering assist torque in proximity of the maximum steering angle, the known apparatus requires a steering angle sensor and can not sufficiently alleviate a shock at the time of the end contact due to the inertia of the electric motor when the steering speed is large.

Additionally, in the known apparatus disclosed in JP-A-2001-30933, since the attenuation starting steering angle is set in correspondence to the load of the steering wheel and the steering speed of the steering wheel, the large shock occurring at the time of the end contact due to the inertia of the electric motor can be prevented by increasing a difference between the maximum steering angle and the attenuation starting angle (advancing a time point of reducing the driving force of the electric motor) when the steering speed is large. However, the known apparatus requires a speed sensor for detecting the steering speed of the steering wheel. Additionally, since the steering assist force becomes insufficient due to an attenuation of the driving force of the electric motor when the steering wheel is returned from the proximity of the maximum steering angle to the neutral position, a feeling of the steering is deteriorated.

In order to solve the problems, an apparatus for mechanically reducing the shock at the time of the end contact has been devised (a third related art) (for example, Japanese Patent Unexamined Publication JP-A-2000-335431).

The apparatus disclosed in JP-A-2000-335431 includes a torque limiter for restricting a transmission of the torque transmitted from the electric motor from acting on a portion in the middle of a steering-force transmitting system disposed between the electric motor and the steering wheel when the torque reaches a predetermined value. With such a torque limiter, it is possible to prevent an occurrence of a large shock by restricting a torque due to a rapidly increasing rotation energy of the electric motor and suppressing a transmission of a torque not less than a predetermined value toward the steering wheel when the steering wheel is suddenly stopped because the steering wheel reaches the steering limit position.

Incidentally, an impact force occurring when reaching a steering limit position such as an end contact or when a tire is brought into contact with a curbstone may have a great influence on a middle shaft as a torque transmitting member interposed between a steering shaft and a steering gear, and thus deteriorating durability of the middle shat. The known apparatus can alleviate a shock at the time of reaching a steering limit position such that a steering mechanism is brought into contact with a mechanical stopper (for example, an end contact) or the tire is brought into contact with the curbstone or the like. However, in the first and second related arts using software as a solving method, since absolute angle information of the steering wheel is used, there is required a high-accuracy steering angle sensor or an absolute steering angle estimation function. For this reason, a low-accuracy steering angle sensor for a skid preventing device can not be used, and a high-cost steering angle sensor or the absolute steering angle estimation function is required, whereby a manufacturing cost increases.

Additionally, since such the apparatus of the third related art requires a torque limiter for mechanically preventing a shock at the time of an end contact, a manufacturing cost increases.

SUMMARY OF THE INVENTION

In view of the above, the invention is contrived in consideration of the problems of the related arts. An object of the invention is to provide an electric power steering apparatus capable of alleviating a shock force transmitted to a torque transmitting member such as a middle shaft without adding the steering angle sensor, the torque limiter, and the like at the time of reaching the steering limit position such as the end contact or a state that a tire is brought into contact with a curbstone or the like.

In order to solve the above described problems, according to a first aspect of the invention, there is provided an electric power steering apparatus comprising:

> a steering torque detection part which detects steering torque inputted to a steering mechanism;
> a current command value calculation part which calculates a current command value on the basis of at least the steering torque detected by the steering torque detection part;
> an electric motor which generates a steering assist torque applied on a steering shaft of the steering mechanism; and
> a motor control part which controls the electric motor by a pulse-width modulating signal on the basis of the current command value,

wherein the motor control part comprises:

> a motor torque detection part which detects a motor torque generated between the electric motor and the steering shaft;
> a motor torque change rate detection part which calculates a change rate of the motor torque detected by the motor torque detection part; and
> a duty ratio limiting part which judges that a duty ratio limiting condition is satisfied when the change rate of the motor torque calculated by the motor torque change rate detection part is not less than a threshold value for judging a steering limit, and

wherein the duty ratio limiting part fixes a duty ratio of the pulse-width modulating signal to a predetermined value for limiting a torque transmitted to a torque transmitting member between the steering shaft of the steering mechanism and a steering road wheel when the duty ratio limiting condition is satisfied.

According to a second aspect of the invention, as set forth in the first aspect of the invention, it is preferable that the motor torque detection part comprises:

> a driving current detection part which detects driving current of the electric motor;
> a rotational angular acceleration detection part which detects a rotational angular acceleration of the electric motor; and
> a motor torque calculation part which calculates the torque generated between the electric motor and the steering shaft on the basis of the driving current of the electric motor detected by the driving current detection part and the rotational angular acceleration detected by the rotational angular acceleration detection part.

According to a third aspect of the invention, as set forth in the first aspect of the invention, it is preferable that the motor torque detection part comprises a magnetostrictive torque sensor which is disposed on a torque transmitting shaft provided between an output shaft of the electric motor and the steering shaft.

According to a fourth aspect of the invention, as set forth in the first aspect of the invention, it is preferable that the duty ratio limitingpart judges that the duty ratio limiting condition is satisfied when:

the change rate of the motor torque is not less than the threshold value; and
an absolute value of the motor torque detected by the motor torque detection part is not less than a predetermined value,
then, the duty ratio limiting part fixes the duty ratio to the predetermined value.

According to a fifth aspect of the invention, as set forth in the first aspect of the invention, it is preferable that the duty ratio limiting part judges that the duty ratio limiting condition is satisfied when:

the change rate of the motor torque is not less than the threshold value; and
a state where the absolute value of the motor torque detected by the motor torque detection part is not less than a predetermined value is continuously maintained for a predetermined time,
then the duty ratio limiting part fixes the duty ratio to the predetermined value.

According to a sixth aspect of the invention, as set forth in the first aspect of the invention, it is preferable that the duty ratio limiting part fixes the duty ratio to the predetermined value when
the duty ratio limiting part judges that the duty ratio limiting condition is satisfied; and
a sign of the change rate of the motor torque coincides with a sign of the calculated motor torque value.

According to a seventh aspect of the invention, it is preferable that the electric power steering apparatus as set forth in the first aspect of the invention, further comprising:

a motor angular velocity detecting unit which detects a motor angular velocity of the electric motor,

wherein the duty ratio limiting part fixes the duty ratio to the predetermined value when:

it is judged that the duty ratio limiting condition is satisfied; and
the motor angular velocity detected by the motor angular velocity detecting unit is not less than a predetermined value.

According to an eighth aspect of the invention, it is preferable that the electric power steering apparatus as set forth in the first aspect of the invention, further comprising:

a motor angular velocity detecting unit which detects a motor angular velocity of the electric motor,

wherein the duty ratio limiting part fixes the duty ratio to the predetermined value when:

it is judged that the duty ratio limiting condition is satisfied; and
the motor angular velocity detected before a predetermined time by the motor angular velocity detecting unit is not less than a predetermined value.

According to a ninth aspect of the invention, as set forth in the first aspect of the invention, it is preferable that the duty ratio limiting part releases the duty ratio fixed to the predetermined value when a predetermined time passes after the duty ratio is fixed to the predetermined value.
According to a tenth aspect of the invention, as set forth in the ninth aspect of the invention, it is preferable that the predetermined time for releasing the duty ratio fixed to the predetermined value is set based on the motor angular velocity.
According to an eleventh aspect of the invention, it is preferable that the electric power steering apparatus as set forth in the first aspect of the invention, further comprising:

a vehicle speed detecting unit which detects a vehicle speed,

wherein the duty ratio limiting part comprises a threshold value setting unit which increases the threshold value for judging the steering limit in accordance with an increase of the vehicle speed detected by the vehicle speed detecting unit.
According to a twelfth aspect of the invention, as set forth in the first aspect of the invention, it is preferable that the motor control part comprises an inverter which is driven by the pulse-width modulating signal so as to supply motor current to the electric motor, and
wherein the duty ratio limiting part controls one of an upper arm and a lower arm of an inverter to be an ON state at the same time when the duty ratio limiting condition is satisfied, so as to control into an electromagnetic brake mode.

According to a thirteenth aspect of the invention, as set forth in the first aspect of the invention, it is preferable that the torque transmitting member of the steering mechanism comprises a middle shaft which is connected to a joint having a yoke manufactured by a press molding method.

According to a fourteenth aspect of the invention, as set forth in the first aspect of the invention, it is preferable that the steering mechanism includes a buffer member on a rack stroke end of a steering gear.

According to a fifteenth aspect of the invention, there is provided an electric power steering apparatus comprising:

a steering torque detection part which detects a steering torque inputted to a steering mechanism;
a current command value calculation part which calculates a current command value on the basis of at least the steering torque detected by the steering torque detection part;
an electric motor which generates a steering assist torque applied on a steering shaft of the steering mechanism; and
a motor control part which controls the electric motor by a pulse-width modulating signal on the basis of the current command value,

wherein the motor control part comprises:

a driving current detection part which detects a driving current of the electric motor;
a current change rate detection part which calculates a change rate of the driving current of the electric motor detected by the driving current section, and
a duty ratio limiting part which judges that a duty ratio limiting condition is satisfied when the change rate of the driving current of the electric motor calculated by the current change rate detection part is not less than a threshold value for judging a steering limit, and

wherein the duty ratio limiting part fixes a duty ratio of the pulse-width modulating signal to a predetermined value for limiting a torque transmitted to a torque transmitting member between the steering shaft of the steering mechanism and a steering road wheel when the duty ratio limiting condition is satisfied.

According to a sixteenth aspect of the invention, as set forth in the fifteenth aspect of the invention, it is preferable that the duty ratio limiting part judges that the duty ratio limiting condition is satisfied when:

the change rate of the driving current of the electric motor is not less than the threshold value; and
an absolute value of a detected driving current value of the electric motor is not less than a predetermined value,
then the duty ratio limiting part fixes the duty ratio to the predetermined value.

According to a seventeenth aspect of the invention, as set forth in the fifteenth aspect of the invention, it is preferable that the duty ratio limiting part fixes the duty ratio to the predetermined value when it is judged that the duty ratio limiting condition is satisfied in the state that:

the change rate of the driving current of the electric motor is not less than the threshold value; and
the absolute value of a detected driving current value of the electric motor is not less than a predetermined value
is continuously maintained for a predetermined time.

According to an eighteenth aspect of the invention, as set forth in the fifteenth aspect of the invention, it is preferable that the duty ratio limiting part limits the duty ratio to the predetermined value when it judged that:

the duty ratio limiting condition is satisfied; and
a sign of the change rate of the driving current of the electric motor coincides with a sign of the detected driving current value.

According to a nineteenth aspect of the invention, it is preferable that the electric power steering apparatus as set forth in the fifteenth aspect of the invention, further comprising:

a motor angular velocity detecting unit which detects a motor angular velocity of the electric motor,

wherein the duty ratio limiting part fixes the duty ratio to the predetermined value when:

it is judged that the duty ratio limiting condition is satisfied; and

the motor angular velocity detected by the motor angular velocity detecting unit is not less than a predetermined value.

According to a twentieth aspect of the invention, it is preferable that the electric power steering apparatus as set forth in the fifteenth aspect of the invention, further comprising:

a motor angular velocity detecting unit which detects a motor angular velocity of the electric motor,

wherein the duty ratio limiting part fixes the duty ratio to the predetermined value when it is judged that:

the duty ratio limiting condition is satisfied; and
the motor angular velocity detected before a predetermined time by the motor angular velocity detecting unit is not less than a predetermined value.

According to a twenty-first aspect of the invention, it is preferable that the electric power steering apparatus as set forth in the fifteenth aspect of the invention, further comprising:

a motor angular velocity detecting unit which detects a motor angular velocity of the electric motor,

wherein the duty ratio limiting part fixes the duty ratio to the predetermined value when it judged that:

the duty ratio limiting condition is satisfied; and
a sign of a change rate of the motor angular velocity coincides with a sign of the detected driving current value.

According to a twenty-second aspect of the invention, as set forth in the fifteenth aspect of the invention, it is preferable that the duty ratio limiting part releases the duty ratio fixed to the predetermined value when a predetermined time passes after the duty ratio is fixed to the predetermined value.
According to a twenty-third aspect of the invention, as set forth in the twenty-second aspect of the invention, it is preferable that the predetermined time for releasing the duty ratio fixed to the predetermined value is set based on the motor angular velocity.
According to a twenty-fourth aspect of the invention, it is preferable that the power steering apparatus as set forth in the fifteenth aspect of the invention, further comprising:

a vehicle speed detecting unit which detects a vehicle speed,

wherein the duty ratio limiting part comprises a threshold value setting unit which increases the threshold value for judging the steering limit in accordance with an increase of the vehicle speed detected by the vehicle speed detecting unit.
According to a twenty-fifth aspect of the invention, as set forth in the fifteenth aspect of the invention, it is preferable that the motor control part comprises an inverter which is driven by the pulse-width modulating signal so as to supply motor current to the electric motor, and
wherein the duty ratio limiting part controls one of an upper arm and a lower arm of the inverter to be an ON state at the same time when the duty ratio limiting condition is satisfied, so as to control into an electromagnetic brake mode.
According to a twenty-sixth aspect of the invention, as set forth in the fifteenth aspect of the invention, it is preferable that the torque transmitting member of the steering mechanism comprises a middle shaft which is connected to a joint having a yoke manufactured by a press molding method.
According to a twenty-seventh aspect of the invention, as set forth in the fifteenth aspect of the invention, it is preferable that the steering mechanism comprises a buffer member on a rack stroke end of a steering gear.
According to a twenty-eighth aspect of the invention, there is provided an electric power steering apparatus comprising:

a steering torque detection part which detects a steering torque inputted to a steering mechanism which steers a steering road wheel;
a current command value calculation part which calculates a current command value on the basis of at least the steering torque detected by the steering torque detection part;
an electric motor which generates a steering assist torque applied on a steering shaft of the steering mechanism;
a motor control part which controls the electric motor by a pulse-width modulating signal on the basis of the current command value; and
a self-aligning torque detection part which detects a self-aligning torque inputted to the steering shaft from the steering road wheel,

wherein the motor control part comprises:

a self-aligning torque change rate detection part which calculates a change rate of the self-aligning torque detected by the self-aligning torque detection part; and

a duty ratio limiting part which judges that a duty ratio limiting condition is satisfied when the change rate of the self-aligning torque is not less than a threshold value for judging a steering limit, and

wherein the duty ratio limiting part fixes a duty ratio of the pulse-width modulating signal to a predetermined value for limiting a torque transmitted to a torque transmitting member between the steering shaft of the steering mechanism and the steering road wheel when the duty ratio limiting condition is satisfied.

According to a twenty-ninth aspect of the invention, as set forth in the twenty-eighth aspect of the invention, it is preferable that the duty ratio limiting part judges that the duty ratio limiting condition is satisfied when:

the change rate of the self-aligning torque is not less than the threshold value; and

an absolute value of the self-aligning torque detected by the self-aligning torque detection part is not less than a predetermined value,

then, the duty ratio limiting part fixes the duty ratio to the predetermined value.

According to a thirtieth aspect of the invention, as set forth in the twenty-eighth aspect of the invention, it is preferable that the duty ratio limiting part fixes the duty ratio to the predetermined value when it is judged that the duty ratio limiting condition is satisfied in the state that:

the change rate of the self-aligning torque is not less than the threshold value; and

the absolute value of the self-aligning torque detected by the self-aligning torque detection part is not less than a predetermined value is continuously maintained for a predetermined time.

According to a thirty-first aspect of the invention, as set forth in the twenty-eighth aspect of the invention, it is preferable that the duty ratio limiting part fixes the duty ratio to the predetermined value when it judged that:

the duty ratio limiting condition is satisfied; and

a sign of the change rate of the self-aligning torque coincides with a sign of the calculated self-aligning torque value.

According to a thirty-second aspect of the invention, it is preferable that the electric power steering apparatus as set forth in the twenty-eighth aspect of the invention, further comprising:

a motor angular velocity detecting unit which detects a motor angular velocity of the electric motor,

wherein the duty ratio limiting part fixes the duty ratio to the predetermined value when it is judged that:

the duty ratio limiting condition is satisfied; and

the motor angular velocity detected by the motor angular velocity detecting unit is not less than a predetermined value.

According to a thirty-third aspect of the invention, it is preferable that the electric power steering apparatus as set forth in the twenty-eighth aspect of the invention, further comprising:

a motor angular velocity detecting unit which detects a motor angular velocity of the electric motor,

wherein the duty ratio limiting part fixes the duty ratio to the predetermined value when it is judged that:

the duty ratio limiting condition is satisfied; and

the motor angular velocity detected before a predetermined time by the motor angular velocity detecting unit is not less than a predetermined value.

According to a thirty-fourth aspect of the invention, it is preferable that the electric power steering apparatus as set forth in the twenty-eighth aspect of the invention, further comprising:

a motor angular velocity detection part which detects a motor angular velocity of the electric motor; and

a rotational angular acceleration detection part which detects a rotational angular acceleration of the electric motor,

wherein the self-aligning torque detection part is configured to calculate the self-aligning torque on the basis of:

the steering torque detected by the steering torque detection part;
the current command value calculated by the current command value calculation part;
the motor angular velocity detected by the motor angular velocity detection part; and
the rotational angular acceleration detected by the rotational angular acceleration detection part.

According to a thirty-fifth aspect of the invention, it is preferable that the electric power steering apparatus as set forth in the thirty-second aspect of the invention, further comprising:

a rotational angular acceleration detection part which detects a rotational angular acceleration of the electric motor,

wherein the self-aligning torque detection part is configured to calculate the self-aligning torque on the basis of:

the steering torque detected by the steering torque detection part;
the current command value calculated by the current command value calculation part;
the motor angular velocity detected by the motor angular velocity detection part; and
the rotational angular acceleration detected by the rotational angular acceleration detection part.

According to a thirty-sixth aspect of the invention, as set forth in the twenty-eighth aspect of the invention, it is preferable that the duty ratio limiting part releases the duty ratio fixed to the predetermined value when a predetermined time passes after the duty ratio is fixed to the predetermined value.

According to a thirty-seventh aspect of the invention, as set forth in the thirty-sixth aspect of the invention, it is preferable that the predetermined time for releasing the duty ratio fixed to the predetermined value is set based on the motor angular velocity.

According to a thirty-eighth aspect of the invention, it is preferable that the electric power steering apparatus as set forth in the twenty-eighth aspect of the invention, further comprising:

a vehicle speed detecting unit which detects a vehicle speed,

wherein the duty ratio limiting part comprises a threshold value setting unit which increases the threshold value for judging the steering limit in accordance with an increase of the vehicle speed detected by the vehicle speed detecting unit.

According to a thirty-ninth aspect of the invention, as set forth in the twenty-eighth aspect of the invention, it is preferable that the motor control part comprises an inverter which is driven by the pulse-width modulating signal so as to supply motor current to the electric motor, and
the duty ratio limiting part controls one of an upper arm and a lower arm of the inverter to be an ON state at the same time when the duty ratio limiting condition is satisfied, so as to control into an electromagnetic brake mode.

According to a fortieth aspect of the invention, as set forth in the twenty-eighth aspect of the invention, it is preferable that the torque transmitting member of the steering mechanism comprises a middle shaft which is connected to a joint having a yoke manufactured by a press molding method.

According to a forty-first aspect of the invention, as set forth in the twenty-eighth aspect of the invention, it is preferable that the steering mechanism comprises a buffer member on a rack stroke end of a steering gear.

According to the invention, since a duty ratio of a pulse-width modulating signal is fixed to a predetermined value for limiting a torque transmitted to a torque transmitting member disposed between a steering shaft of a steering mechanism and a steering road wheel, when it is judged a duty ratio limiting condition is satisfied in a state that a motor torque change rate acquired from a motor torque detection part is not less than a threshold value for judging a steering limit position, a steering assist torque generated by an electric motor can be limited before a large torque is transmitted to the torque transmitting member such as a middle shaft interposed between the steering shaft and a steering gear. Accordingly, it becomes possible to securely suppress a shock force form being transmitted to the torque transmitting member without additionally providing with a steering angle sensor, a torque limiter, and the like at the time of reaching a steering limit position such as an end contact and a state that a tire is brought into contact with a curbstone.

According to the invention, since the duty ratio of the pulse-width modulating signal is fixed to the predetermined value for limiting the torque transmitted to the torque transmitting member between the steering shaft of the steering mechanism and the steering road wheel, when it is judged the duty ratio limiting condition is satisfied in a state that a self-aligning torque change rate acquired from a self-aligning torque detection part is not less than a threshold value for judging the steering limit position, the steering assist torque generated by the electric motor can be limited before the large torque is transmitted to the torque transmitting member such as the middle shaft interposed between the steering shaft and the steering gear. Therefore, it becomes possible to securely suppress the shock force from being transmitted to the torque transmitting member without additionally providing with the steering angle sensor, the torque limiter, and the like at the time of reaching the steering limit position such as the end contact and the state that the tire is brought into contact with the curbstone.

BRIEF DESCRIPTION OF THE DRAWINGS

Fig. 1 is a schematic diagram showing a configuration of an electric power steering apparatus related to a first embodiment of the invention;
Fig. 2 is a front view diagram showing a part which represents a specific configuration of a steering gear;
Fig. 3 is a block diagram showing a specific example of a controller related to the invention;
Fig. 4 is a characteristic diagram showing a steering assist torque command value calculation map which represents a relation between a steering assist torque command value and a vehicle speed parameter;
Fig. 5 is a schematic diagram provided for an explanation of a self-aligning torque;
Fig. 6 is a diagram showing a signal wave form which represents a motor torque change at the time of reaching a steering limit;
Fig. 7 is a characteristic diagram showing a torque characteristic transmitted to a middle shaft;
Fig. 8 is a block diagram showing another example of the controller related to the invention;
Fig. 9 is a block diagram showing a further example of the controller related to the invention;
Fig. 10 is a flowchart showing an example which represents a procedure of a threshold value setting process performed by a selection signal generating section as shown in Fig. 9;
Fig. 11 is a characteristic diagram showing a threshold value calculation table used in the threshold value setting process as shown in Fig. 10;
Fig. 12 is a block diagram showing a still further example of the controller related to the invention;
Fig. 13 is a characteristic diagram showing a motor torque and a motor angular velocity at the time of reaching the steering limit;
Fig. 14 is a flowchart showing an example which represents a procedure of a steering assist control process performed by a micro computer;
Fig. 15 is a flowchart showing an example which represents a procedure of a steering limit position detecting process performed by the micro computer;
Fig. 16 is a block diagram showing a specific example of the controller in which a brush motor is used;

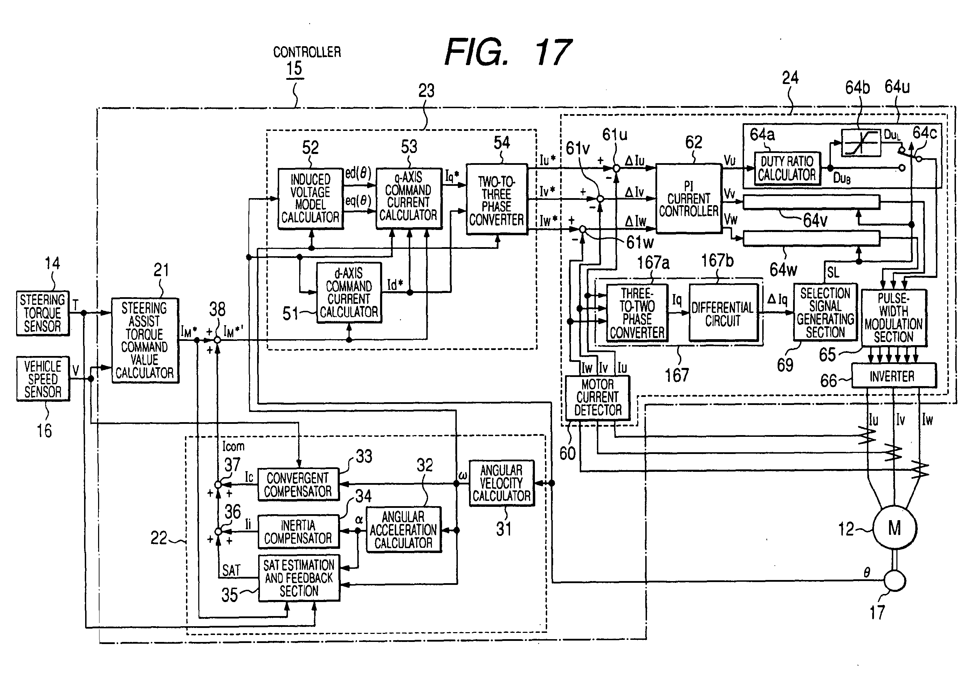

Fig. 17 is a block diagram showing a specific example of a controller related to a second embodiment;
Fig. 18 is a diagram of a signal wave form which represents a q-axis current change at the time of reaching a steering limit;
Fig. 19 is a block diagram showing another example of the controller related to the second embodiment;
Fig. 20 is a block diagram showing a further example of the controller related to the second embodiment;
Fig. 21 is a flowchart showing an example which represents a procedure of a threshold value setting process performed by a selection signal generating section as shown in Fig. 20;
Fig. 22 is a characteristic diagram showing a threshold value calculation table used in the threshold value setting process as shown in Fig. 21;
Fig. 23 is a block diagram showing a still further example of the controller related to the second embodiment;
Fig. 24 is a characteristic diagram showing q-axis current and a motor angular velocity at the time of reaching the steering limit;
Fig. 25 is a flowchart showing an example which represents a procedure of a steering limit position detection process performed by a micro computer;
Fig. 26 is a block diagram showing a specific example of the controller related to the second embodiment in which a brush motor is used;

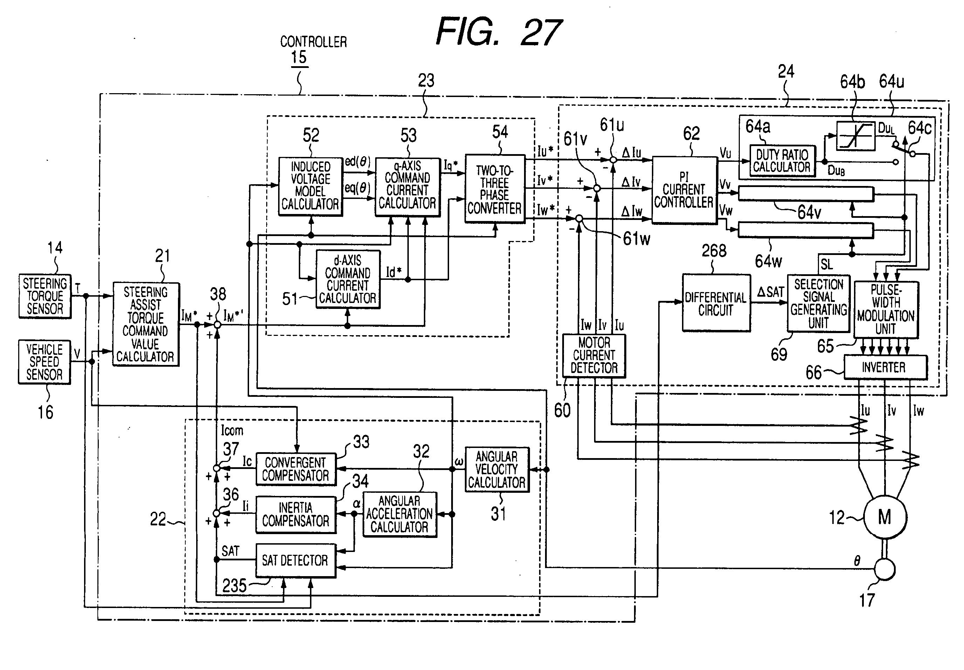

Fig. 27 is a block diagram showing a specific example of a controller related to a third embodiment;
Fig. 28 is a diagram of a signal wave form which represents a self-aligning torque change at the time of reaching a steering limit;
Fig. 29 is a block diagram showing another example of the controller related to the third embodiment;
Fig. 30 is a block diagram showing a further example of the controller related to the third embodiment;
Fig. 31 is a block diagram showing a still further example of the controller related to the third embodiment;
Fig. 32 is a characteristic diagram showing a relation between a self-aligning torque and a motor angular velocity at the time of reaching a steering limit;
Fig. 33 is a flowchart showing an example which represents a procedure of a steering limit position detection process performed by a micro computer; and

Fig. 34 is a block diagram showing a specific example of the controller related to the third embodiment in which a brush motor is used.

DETAILED DESCRIPTION OF EXEMPLARY EMBODIMENTS OF THE INVENTION EMBODIMENTS

Hereinafter, embodiments of the invention will be described with reference to the drawings.

[First Embodiment]

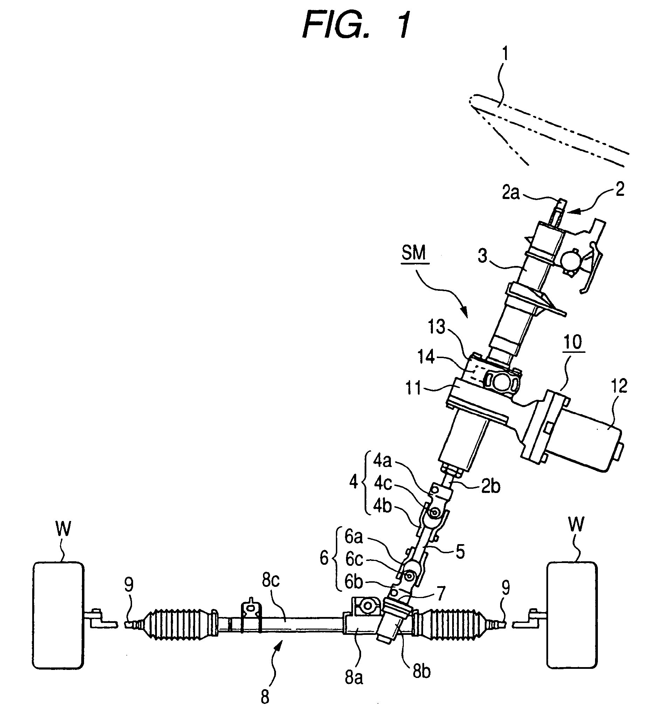

Fig. 1 is a schematic diagram showing a configuration of an electric power steering apparatus related to a first embodiment of the invention. In Fig. 1, a symbol SM stands for a steering mechanism. The steering mechanism SM includes a steering shaft 2 which includes an input shaft 2a receiving a steering force applied by a driver to a steering wheel 1 and an output shaft 2b connected to the input shaft 2a via a torsion bar (not shown). The steering shaft 2 is rotatably received in a steering column 3, one end of the input shaft 2a is connected to the steering wheel 1, and the other end thereof is connected to the torsion bar (not shown).

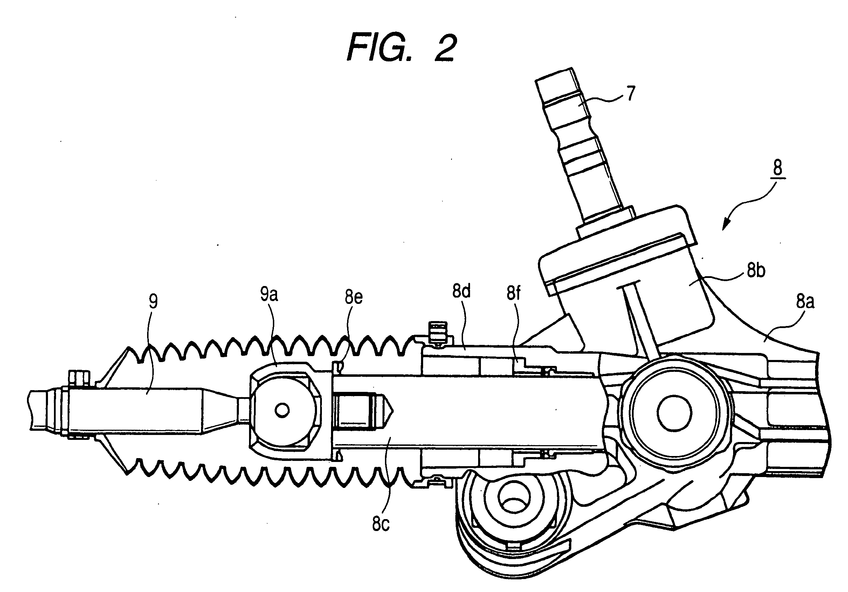

The steering force transmitted to the output shaft 2b is transmitted to a middle shaft 5 via a universal joint 4 configured by two yokes 4a and 4b and a cross-connection unit 4c connecting the yokes 4a and 4b to each other, and then transmitted to a pinion shaft 7 via a universal joint 6 configured by two yokes 6a and 6b and a cross-connection unit 6c connecting the yokes 6a and 6b to each other.
The steering force transmitted to the pinion shaft 7 is transmitted to left and right tie-rods 9 via a steering gear 8, and the direction of steering road wheel (not shown) is steered by the tie-rods 9. Here, as shown in Fig. 2, the steering gear 8 is configured as a rack-and-pinion-type gear in which a pinion 8b connected to the pinion shaft 7 and a rack shaft 8c engaging with the pinion 8b are disposed in a gear housing 8a, and a rotational movement transmitted to the pinion 8b is converted into a linear movement by a rack shaft 8c.

Both ends of the rack shafts 8c are connected to the tie-rods 9 via a ball joint 9a. A stopper member 8f, which is brought into contact with a buffer member 8e, which is formed on an inner end surface of the ball joint 9a fitted to the rack shaft 8c, is formed on an inner circumferential surface of a cylindrical shaped portion 8d covering the rack shaft 8c of the gear housing 8a at the time when the rack shaft 8c reaches a steering limit position, that is, a rack stroke end is occurred.

The output shaft 2b of the steering shaft 2 is connected to a steering assist mechanism 10 that transmits a steering assist force to the output shaft 2b. The steering assist mechanism 10 includes a deceleration gear 11 connected to the output shaft 2b, and an electric motor 12 configured as a brushless motor as an electromotive machine generating the steering assist force connected to the deceleration gear 11.
In addition, a steering torque sensor 14 is disposed in a housing 13 connected to the deceleration gear 11 on the side of the steering wheel 1. The steering torque sensor 14 detects the steering torque applied to the steering wheel 1 and transmitted to the input shaft 2a. For example, the steering torque sensor 14 is configured to convert the steering torque to a displacement in twist angle of the torsion bar (not shown) and detects the twist angle displacement using a non-contact magnetic sensor interposed between the input shaft 2a and the output shaft 2b.

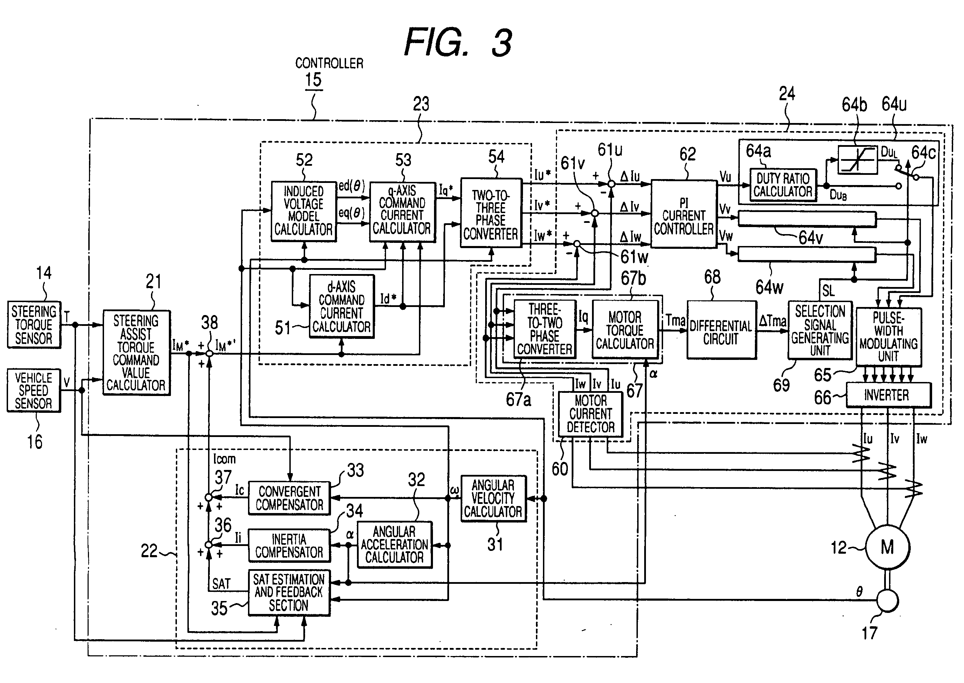

A detected steering torque value T outputted from the steering torque sensor 14 is inputted to a controller 15 as shown in Fig. 3. Together with the detected torque value T, a detected vehicle speed value V detected by a vehicle speed sensor 16, motor current values Iu, Iv, and Iw flowing in the electric motor 12, and a rotational angle $\theta$ of the electric motor 12 detected by a rotational angle sensor 17 configured by a resolver, an encoder, and the like are also inputted to the controller 15. The controller 15 calculates a steering assist torque command value IM* for instructing the electric motor 12 to generate a steering assist force corresponding to the inputted detected torque value T and the detected vehicle speed value V. Then, the controller 15 performs various compensation processes to the calculated steering assist command value IM* on the basis of a motor angular velocity $\omega$ and a motor angular acceleration $\alpha$ calculated from the rotational angle $\theta$, acquires a d-q axis command values, and performs a two-to-three phase conversion thereto, thereby calculating three-phase current command values Iu*, Iv*, and Iw*. The controller 15 performs a feed back control process to driving current supplied to the electric motor 12 on the basis of the three-phase current command values Iu*, Iv*, and Iw* and the motor current values Iu, Iv, and Iw, and outputs the motor current Iu, Iv and Iw for driving and controlling the electric motor 12.

That is, the controller 15 is configured by a torque command value calculator 21 for calculating the steering assist torque command value IM* on the basis of the steering torque T and the vehicle speed V, a command value compensator 22 for compensating the steering assist torque command value IM* calculated by the torque command value calculator 21, a d-q axis current command value calculation part 23 for calculating the d-q axis current command value on the basis of the compensated torque command value IM*' acquired from the command value compensator 22, and a motor current controller 24 for generating the motor current values Iu, Iv, and Iw on the basis of the current command values outputted from the d-q axis current command value calculation part 23.

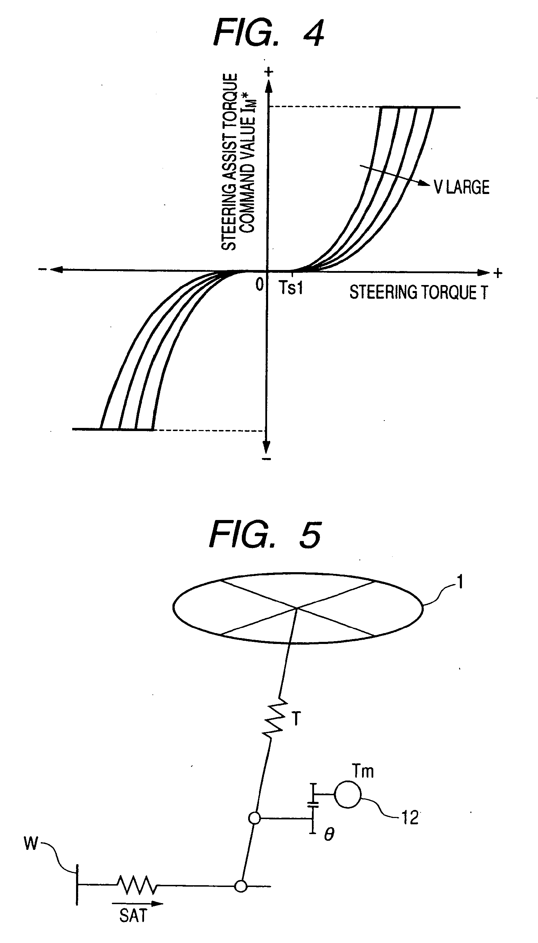

The steering assist torque command value calculator 21 calculates the steering assist torque command value IM* including the current command values on the basis of the steering torque T and the vehicle speed V by referring to a steering assist torque command value calculation map as shown in Fig. 4.

As shown in Fig. 4, the steering assist torque command value calculation map is configured as a characteristic diagram having a parabola-shaped curve, in which a horizontal axis represents the steering torque T, a vertical axis represents the steering assist torque command value IM*, and the vehicle speed V is used as a parameter. The steering assist torque command value IM* is maintained in the state of "0" . When the steering torque T is in the range of "0" and a preset value Ts1, when the steering torque T exceeds the preset value Ts1, the steering assist command value IM* begins to increase the steering torque T with a relatively small slope, and when the steering torque T is further increased, the steering assist torque command value IM* increases with the steering torque T with a large slope. The slope of the characteristic curve is set to decrease with the vehicle speed.

The command value compensator 22 includes an angular velocity calculator 31 for calculating a motor angular velocity $\omega$ by differentiating the motor rotational angle $\theta$ detected by the rotational angle sensor 17, an angular acceleration calculator 32 for calculating a motor angular acceleration $\alpha$ by differentiating the motor angular velocity $\omega$ calculated by the angular velocity calculator 31, a convergent compensator 33 for compensating the convergent of a yaw rate on the basis of the motor angular velocity $\omega$ calculated by the angular velocity calculator 31, an inertia compensator 34 compensating the torque generated by the inertia of the electric motor 12 on the basis of the motor angular acceleration $\alpha$ calculated by the angular acceleration calculator 32, and a SAT (self-aligning torque) estimation and feedback section 35 for estimating a self-aligning torque (SAT) and thus preventing a deterioration in the control response or the feeling of the inertia.

Here, the convergent compensator 33 receives the vehicle speed V detected by the vehicle speed sensor 16 and the motor angular velocity $\omega$ calculated by the angular velocity calculator 31, and calculates the convergent compensation value Ic by multiplying the motor angular velocity $\omega$ by the convergent control gain Kv varying with the vehicle speed V so that a rotation of the steering wheel 1 is braked in order to enhance the convergent characteristic of a yaw of the vehicle.

Additionally, the steering torque T, the angular velocity $\omega$, the angular acceleration $\alpha$, and the steering assist command value IM* calculated by the steering assist torque command value calculator 21 are inputted to the SAT estimation and feedback section 35, and an estimation calculation is performed to the self-aligning torque SAT on the basis of them. The principle of calculating the self-aligning torque SAT will be described with reference to Fig. 5 showing the torque generated between a road surface and the steering wheel. Specifically, the steering torque T is generated by the driver steering the steering wheel 1, and an assist torque Tm is generated by the electric motor 12 in accordance with the steering torque T. As a result, the direction of a wheel W is changed, the self-aligning torque SAT due to the reactive force is generated. In addition, at this time, a torque resisting the steering of the steering wheel 1 is generated by an inertia J and a friction (a static friction) Fr of the electric motor 12. An equation of motion such as the following equation (1) may be obtained in consideration of a balance of the forces.

$$J \cdot \alpha + Fr \cdot \sin(\omega) + SAT = Tm + T \ldots (1)$$

Here, the following equation (2) may be obtained by performing Laplas transformation to the equation (1) with its initial values set to "0" and solving for the self-aligning torque SAT.

$$SAT(s) = Tm(s) + T(s) - J \cdot \alpha(s) + Fr \cdot \sin(\omega(s)) \ldots (2)$$

As can be seen from the equation (2), the self-aligning torque SAT can be estimated on the basis of the motor angular velocity $\omega$, the rotational angular acceleration $\alpha$, the assist torque Tm, and the steering torque T by obtaining constants of the inertia J and the static friction Fr of the electric motor 12 in advance. In this embodiment, the steering assist command value IM* is applied instead of the assist torque Tm because the assist torque Tm is in proportional to the steering assist command value IM*.

Additionally, an inertia compensation value Ii calculated by the inertia compensator 34 and the self-aligning torque SAT calculated by the SAT estimation and feedback section 35 are added by an adder 36, and an addition output of the adder 36 and a convergent compensation value Ic calculated by the convergent compensator 33 are added by the adder 37, whereby a command compensation value Icom is calculated. The command compensation value Icom is added to a steering assist torque command value IM* outputted from the steering assist torque command value calculator 21 by an adder 38, whereby a compensated torque command value IM*' is generated. The compensated torque command value IM*' is outputted to the d-q axis current command value calculation part 23.

The d-q axis current command value calculation part 23 includes a d-axis target current calculator 51 for calculating d-axis target current Id* on the basis of the compensated steering assist torque command value IM*' and the motor angular velocity ω, an induced voltage calculator 52 for calculating a d-axis EMF component ed (θ) and a q-axis EMF (Electro Magnetic Force) component eq (θ) of a d-q axis induced voltage model EMF on the basis of the motor rotational angle θ and the motor angular velocity ω, a q-axis target current calculator 53 for calculating q-axis target current Iq* on the basis of the d-axis EMF component ed (θ) and the q-axis EMF component eq (θ) outputted from the induced voltage calculator 52, the d-axis target current Id* outputted from the d-axis target current calculator 51, the compensated steering assist torque command value IM*', and the motor angular velocity ω, and a two-to-three phase converter 54 for converting the d-axis target current Id* outputted from the d-axis target current calculator 51 and the q-axis target current Iq* outputted from the q-axis target current calculator 53 into three-phase current command values Iu*, Iv* and Iw*.

The motor current controller 24 includes a motor current detector 60 for detecting the motor current Iu, Iv and Iw supplied to respective phase coils Lu, Lv and Lw of the electric motor 12, subtractors 61u, 61v and 61w for calculating phase current deviations ΔIu, ΔIv and ΔIw by subtracting the motor current Iu, Iv and Iw detected by the motor current detector 60 from the current command values Iu*, Iv* and Iw* inputted from the two-to-three phase converter 54 of the d-q axis current command value calculation part 23, and a PI current controller 62 for calculating voltage command values Vu, Vv and Vw by performing a proportional integral control to the obtained phase current deviations ΔIu, ΔIv and ΔIw.

Additionally, the motor current controller 24 includes duty ratio calculator/limit calculators 64u, 64v and 64w as a duty ratio limiting part, in which the voltage command values Vu, Vv and Vw outputted from the PI current controller 62 are inputted thereto, the duty ratios DuB, DvB and DwB for each phase are calculated by performing a duty calculation on the basis of the voltage command values Vu, Vv and Vw, limit duty ratios DuL, DvL and DwL which limit the duty ratios DuB, DvB and DwB to a predetermined value such as 3% and those limit duty ratios are selected on the basis of a selection signal SL inputted from a below-mentioned selection signal generating section 69.

Here, as shown in Fig. 3, the duty ratio calculator/limit calculator 64u is configured by a duty ratio calculator 64a for calculating the positive or negative duty ratio DuB on the basis of the voltage command value Vu outputted from the PI current controller 62, a limiter 64b for limiting the duty ratio DuB outputted from the duty ratio calculator 64a to the predetermined value such as 3%, and a selection switch portion 64c for selecting the duty ratio DuB in the state where the signal SL is the logical value "0" and selecting the duty ratio DuL in the state where the signal SL is the logical value "1" after the duty ratio DuB outputted from the duty ratio calculator 64a and the limit duty ratio DuL outputted from the limiter 64b are inputted thereto. Additionally, the duty ratio calculator/limit calculators 64v and 64w have the same configuration as that of the duty ratio calculator/limit calculator 64u.

In addition, the motor current controller 24 includes a pulse-width modulating section 65 for outputting a pulse-width modulating signal by performing a pulse-width modulation on the basis of the duty ratios outputted from the duty ratio calculator/limit calculators 64u, 64v and 64w, an inverter 66 for receiving and outputting the three-phase motor current Iu, Iv and Iw to the electric motor 12 after the selection pulse-width modulating signal outputted from the pulse-width modulating section 65 are inputted thereto, a motor torque detection part 67 for detecting the motor torque Tma on the basis of the motor current Iu, Iv and Iw detected by the motor current detector 60 and the rotational angular acceleration α calculated by the angular acceleration calculator 32, a differential circuit 68 as a motor torque change rate detection part for calculating the motor torque change rate ΔTma by differentiating the motor torque Tma detected by the motor torque detection part 67, and the selection signal generating section 69 for outputting the selection signal SL of the logical value "0" in the state where the motor torque change rate ΔTma calculated by the differential circuit 68 is less than the threshold value ΔTth for judging the steering limit and outputting the selection signal SL of the logical value "1" in the state where the motor torque change rate ΔTma is not less than the threshold value ΔTth.

Here, the motor torque detection part 67 includes a three-to-two phase converter 67a for converting the motor current Iu, Iv and Iw detected by the motor current detector 60 into the d-axis current Id and the q-axis current Iq, respectively and a motor torque calculation part 67b for calculating the motor torque Tma by applying the following equation (3) to the q-axis current Iq converted by the three-to-two phase converter 67a and the rotational angular acceleration α calculated by the angular acceleration calculator 32.

$$ Tma = Kt \cdot Iq - Jm \cdot \alpha \ \text{......} \ (3) $$

Here, Kt is a torque constant of the motor, and Jm is an inertia moment of a rotor portion of the motor.

In addition, the selection signal generating section 69 judges whether the motor torque change rate ΔTma calculated by the differential circuit 68 is not less than the threshold value ΔTth (for example, 150 Nm/sec) for judging the motor torque of a large slope that does not occur at the time of a normal steering but may occur at the time of reaching the steering limit such that the rack shaft 8c of the steering gear 8 reaches the rack stroke end or a tire can not perform its actual steering road wheel due to contacting with a curbstone or the like. The selection signal generating section 69 outputs the selection signal SL of the logical value "0" in the state that the motor torque change rate ΔTma calculated by the differential circuit 68 is less than the threshold value ΔTth since it is judged that the rack shaft 8c does not reach the rack stroke end, and outputs the selection signal SL of the logical value "1" in the state that the motor torque change rate ΔTma calculated by the differential circuit 68 is not less than the threshold value ΔTth since it is judged that the rack shaft 8c reaches the rack stroke end.

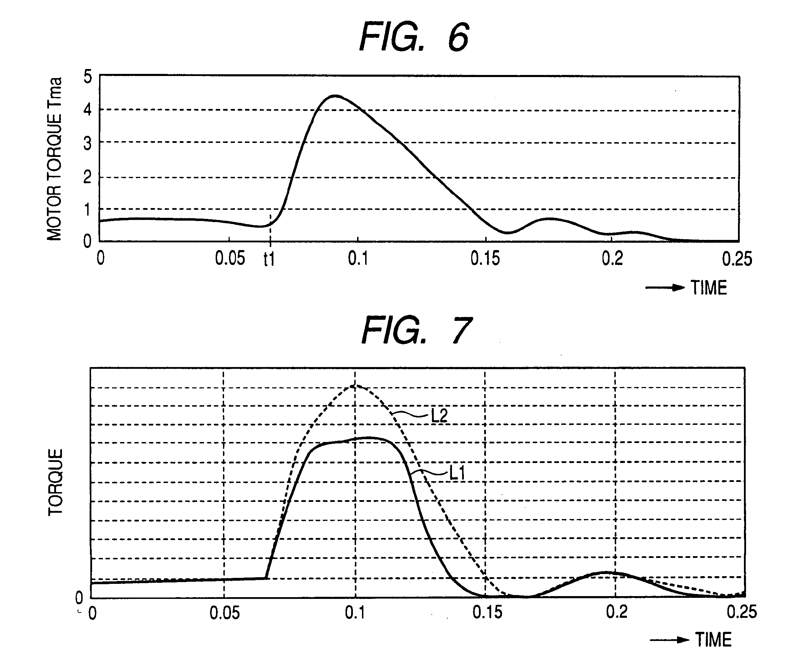

Here, as shown in Fig. 6, in which a motor torque wave form is outputted from the motor torque calculation part 67b when the rack shaft 8c reaches the steering limit position, assuming that the rack shaft 8c reaches the steering limit position at the time point t1, the movement of the rack shaft 8c in the direction of the vehicle width is stopped. Due to this, the rotation of the electric motor 12 is stopped in terms of the pinion shaft 7, the universal joint 6, the middle shaft 5, the universal joint 4, the output shaft 2b of the steering shaft 2, and the deceleration gear 11. Accordingly, the motor current values Iu, Iv, and Iw supplied to the electric motor 12 rapidly increase and additionally the torque due to the inertia moment of the motor is added to the motor torque Tma. For this reason, the motor torque Tma increases with a large slope (175 Nm/sec or so in the example shown in Fig. 6) that does not occur at the time of a normal steering. After this, the motor current values Iu, Iv, and Iw is gradually decreased by an operation of an over-current preventing circuit, whereby the motor torque Tma gradually decreases. Accordingly, by setting the threshold value ΔTth of the motor torque change rate ΔTma to a predetermined value (for example, 150 Nm/sec or so), it is possible to securely detect the steering limit position.

Next, an operation of the first embodiment will be described.
In order to start driving the vehicle, a power is inputted to the controller 15 by turning on an ignition switch IG, whereby a steering assist control process is performed.
Accordingly, the steering torque T detected by the steering torque sensor 14, the vehicle speed V detected by the vehicle speed sensor 16, the detected motor current values Iu, Iv, and Iw detected by the motor current detectors 60u, 60v, and 60w, and the motor rotational angle θ detected by the rotational angle sensor 17 are supplied to the controller 15.

Thus, the steering assist torque command value IM* is calculated by the steering assist torque command value calculator 21 on the basis of the steering torque T and the vehicle speed V with reference to the steering assist command value calculation map shown in Fig. 4.
On the other hand, the motor rotational angle θ detected by the rotational angle sensor 17 is inputted to the angular velocity calculator 31, whereby the motor angular velocity ω is calculated. The motor angular velocity ω is inputted to the angular acceleration calculator 32, whereby the motor angular acceleration α is calculated.

Additionally, the convergent compensation value Ic is calculated by the convergent compensator 33 on the basis of the motor angular velocity ω. The inertia compensation value Ii is calculated by the inertia compensator 34 on the basis of the motor angular acceleration. The self-aligning torque SAT is calculated by the SAT estimation and the feedback section 35 on the basis of the motor angular velocity ω and motor angular acceleration α. The command value compensation value Icom is calculated by the adders 36 and 37 by adding the convergent compensation value Ic, the inertia compensation value Ii, and the self-aligning torque SAT. The compensated steering assist torque command value compensation value IM*' is calculated by the adder 38 by adding the command value compensation value Icom to the steering assist torque command value IM*.

The calculated compensated steering assist torque command value compensation value IM*' is supplied to the d-q axis current command value calculation part 23. At this time, the steering torque T detected by the steering torque sensor 14 is "0" and the vehicle speed V detected by the vehicle speed sensor 16 is also "0" in the state where the vehicle is stopped and the steering wheel 1 is not steered, whereby the steering assist torque command value IM* calculated by the steering assist torque command value calculator 21 is "0". In addition, the rotational angular acceleration α calculated by the angular velocity calculator 32 is "0".

On the other hand, since the electric motor 12 is stopped, the motor current values Iu, Iv, and Iw calculated by the motor current detector 60 are "0", and the q-axis current Iq into which the motor current values Iu, Iv, and Iw are converted by the three-to-two phase converter 67a is "0". Accordingly, the motor torque Tma detected by the motor torque detection part 67 is "0", the motor torque change rate ΔTma calculated by the differential circuit 68 is "0", and the motor torque change rate ΔTma of "0" is supplied to the selection signal generating section 69. Since the motor torque change rate ΔTma is less than the threshold value ΔTth, the selection signal SL of the logical value "0" is outputted to the duty ratio calculator/limit calculators 64u, 64v, and 64w. With such a configuration, the duty ratio calculator/limit calculators 64u, 64v, and 64w select the duty ratios DuB, DvB, and DwB outputted from the duty ratio calculators 64a, and the pulse-width modulating signal for driving the gates of the switching elements of an upper arm and a lower arm constituting the inverter 66 are supplied to the inverter 66 from the pulse-width modulating section 65 by inputting the duty ratios DuB, DvB, and DwB to the pulse-width modulating section 65.

At this time, as described above, the compensated steering assist torque command value IM*' is "0", and the compensated torque command value IM*' is supplied to the d-q axis current command value calculation part 23. Accordingly, d-axis target current Id* and q axis target current Iq* are calculated by the d-q axis current command value calculation part 23 performing a command value calculation in d-q axis coordinate system on the basis of the motor rotational angle θ and the motor angular velocity ω, and the d-axis target current Id* and the q-axis target current Iq* are converted into the three-phase current command values Iu*, Iv*, and Iw* of "0" by the two-to-three phase converter 54 and the resultant values are outputted to the motor current controller 24.

In the motor current controller 24, since the motor current values Iu, Iv, and Iw detected by the motor current detector 60 are "0", the current deviations ΔIu, ΔIv, and ΔIw outputted from the subtractors 61u, 61v, and 61ware "0, and the voltage command values Vu, Vv, and Vw outputted from the PI current controller 62 are "0", the duty ratios DuB, DvB, and DwB outputted from the duty ratio calculator/limit calculator 64 become 0%. Additionally, since the pulse-width modulating signal is supplied to the inverter 66 from the pulse-width modulating section 65, the motor current values Iu, Iv, and Iw outputted from the inverter 66 are "0", and thus the stop state of the electric motor 12 is continued.

When a steer without driving, that is, steering the steering wheel 1 to the right side (or the left side) in a state that the electric motor 12 is stopped, the steering torque T in accordance with a steering direction is detected by the steering torque sensor 14, and the steering torque T is supplied to the controller 15. Accordingly, the steering assist torque command value IM* of the inside characteristic curve which promptly obtains a large value in accordance with the increase of the steering torque T is selected by the steering assist torque command value calculator 21 because the vehicle speed V is "0", and then the steering assist torque command value IM* is outputted to the adder 38. Additionally, the rotational angular acceleration α is outputted from the steering.

With such a configuration, the command compensation value Icom calculated by the command value compensator 22 is added thereto by the adder 38 so as to calculate the compensated steering assist torque command value IM*, and the compensated steering assist torque command value IM*' is supplied to the d-q axis current command value calculation part 23.
The d-axis target current Id* and the q-axis target current Iq* in accordance with the compensated torque command value IM*' are calculated by the d-q axis current command value calculation part 23, and the resultant values are converted into the three-phase current command values Iu*, Iv*, and Iw* by the three-to-two phase converter 54 so as to be outputted to the motor current controller 24.

Thus, in the motor current controller 24, since the motor current values Iu, Iv, and Iw detected by the motor current detector 60 are "0", the current command values Iu*, Iv*, and Iw* are supplied to PI current controller 62 as the current deviations ΔIu, ΔIv, and ΔIw outputted from the subtractors 61u, 61v, and 61w, and then the voltage command values Vu, Vv, and Vw are calculated by the PI control process of the PI current controller 62 and outputted to the duty ratio calculator/limit calculators 64u, 64v, and 64w.

In this state, since the motor torque change rate ΔTma calculated by the differential circuit 68 is less than the motor torque change rate at the time of reaching the steering limit position because the change rate is caused by only the rotational angular velocity α, the selection signal SL of the logical value "0" is continuously outputted from the selection signal generating section 69, the duty ratios DuB, DvB, and DwB in accordance with the voltage command values Vu, Vv, and Vw outputted from the duty ratio calculators 64a are selected by the selection switch portions 64c in the duty ratio calculator/limit calculators 64u, 64v, and 64w, the pulse-width modulating signal in accordance with the duty ratios DuB, DvB, and DwB are supplied to the inverter 66 from the pulse-width modulating section 65. With such a configuration, the motor current values Iu, Iv, and Iw are outputted from the inverter 66 so as to rotate the electric motor 12, and the steering assist torque in accordance with the steering torque T is generated so as to be transmitted to the output shaft 2b of the steering shaft 2 in terms of the deceleration gear 11, thereby enabling the steering to be easily performed in the state of the steer without driving.

At this time, due to a rapid increase of the motor current values Iu, Iv, and Iw, the rotational angular velocity α is generated, but the motor torque change rate ΔTma at this time is less than the motor torque change rate at the time of reaching the steering limit position and less than the threshold value ΔTth as described above. Therefore, the selection signal SL of the logical value "0" is continuously outputted from the selection signal generating section 69, so the duty ratios DuB, DvB, and DwB in accordance with the voltage command values Vu, Vv, and Vw outputted from the duty ratio calculators 64a are continuously selected by the selection switch portions 64c of the duty ratio calculator/limit calculator 64.

After that, when the vehicle is started, the vehicle speed V detected by the vehicle speed sensor 16 increases. So, when the steering wheel 1 is steered at the time of driving, the outside characteristic curve of the map shown in Fig. 4 is selected as the steering assist torque command value calculated by the steering assist torque command value calculator 21 selects as the vehicle speed V becomes faster, whereby an increment of the steering assist torque command value IM* set to correspond to an increase of the steering torque T decreases and the steering assist torque generated by the electric motor 12 has a small value relative to the state of the steer without driving, thereby enabling to generate the optimal steering assist torque in accordance with the vehicle speed V.

Incidentally, when the steering wheel 1 is promptly steered to right or left up to the steering limit position in the state of the steer without driving or driving at low speed to enter a garage or the like, the motor current values Iu, Iv, and Iw in accordance with the steering torque T detected by the steering torque sensor 14 are generated by the controller 15 so as to be supplied to the electric motor 12 as described above before reaching the steering limit position, thereby enabling to easily perform the steering.

At this time, it becomes a state that the steering torque T is large, and the duty ratio of the pulse-width modulating signal outputted from the pulse-width modulating section 65 is substantially close to 100% since it is the steering at the time of the steer without driving or driving at extremely low speed. With such the state, when the buffer member 8e of the rack shaft 8c reaches the rack stroke end which is brought into contact with the stopper member 8f or that reaches the steering limit position in such a reason that the tire is brought into contact with the curbstone or the like, the movement of the rack shaft 8c is stopped, whereby revolutions of the pinion 8b, pinion shaft 7, the universal joint 6, the middle shaft 5, the universal joint 4, and the output shaft 2b of the steering shaft 2 are stopped, whereby the rotation of the electric motor 12 is stopped by the deceleration gear 11.

At this time, in the controller 15, since it is in the state that the duty ratio of the pulse-width modulating signal outputted from the pulse-width modulating section 65 is substantially close to 100%, the motor current values Iu, Iv, and Iw outputted from the inverter 66 rapidly increase, and the torque due to the inertia moment of the motor is added thereto as well. The motor current values Iu, Iv, and Iw at this time are detected by the motor current detector 60, the rotational angular acceleration $\alpha$ is calculated by the angular acceleration calculator 32 so as to be supplied to the motor torque detection part 67. With such a configuration, it becomes a state that the motor torque Tma outputted from the motor torque calculation part 67b of the motor torque detection part 67 increases with a large slope as shown in Fig. 6, the motor torque change rate $\Delta$Tma outputted from the differential circuit 68 becomes to be not less than the threshold value $\Delta$Tth.

Since the motor torque change rate $\Delta$Tma which is not less than the threshold value $\Delta$Tth is supplied to the selection signal generating section 69, the selection signal SL of the logical value "1" is outputted to the selection switch portions 64c of the duty ratio calculator/limit calculator 64 from the selection signal generating section 69. With such a configuration, the limit duty ratios DuL, DvL, and DwL of a low duty ratio outputted from the limiters 64b are selected by the selection switch portions 64c and supplied to the pulse-width modulating section 65, and the pulse-width modulating signal in accordance with the limit duty ratios DuL, DvL, and DwL are supplied to the inverter 66 by the pulse-width modulating section 65.

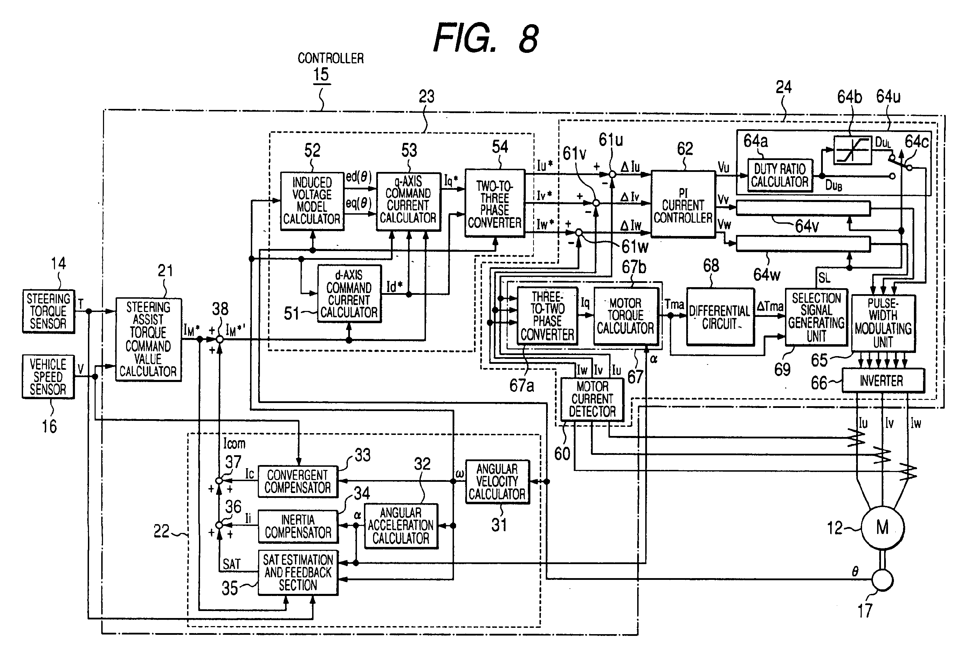

Thus, since the motor current values Iu, Iv, and Iw outputted from the inverter 66 decrease, the steering assist torque generated by the electric motor 12 decreases and a peak value of the torque can be suppressed as shown in Fig. 7 in which peak values of the torque transmitted to the middle shaft 5 are represented by characteristic curves L1 and L2, and the characteristic curve L1 marked with a solid line at the time of performing the duty ratio limit control is compared with a characteristic curve L2 marked with a dashed line at the time of not performing the duty ratio limit control, thereby enabling to enhance the durability of the torque transmitting member of the middle shaft and the like.

Moreover, the motor torque value Tma is detected by the motor torque detection part 67 on the basis of the motor current values Iu, Iv, and Iw detected by the motor current detector 60 and the rotational angular acceleration $\alpha$ calculated by the angular acceleration calculator 32, the motor torque change rate $\Delta$Tma is calculated by the differential circuit 68 differentiating the motor torque value Tma, and the steering limit position of such a state that it is an end contact or the tire contacts with the curbstone is detected by comparing the motor torque change rate $\Delta$Tma with the threshold value $\Delta$Tth, thereby enabling to detect the steering limit position and a state at the time of reaching the steering limit position in a short time (for example, 10 msec or so). Since the steering assist torque generated by the electric motor 12 can be limited in a short time (for example, 20 msec or so) after the steering limit position is detected, the steering assist torque can be limited within a time (for example, 30 msec or so) that the peak value of the transmitting torque occurs in the middle shaft 5 after reaching the steering limit position in the case that the rack shaft 8c is not provided with the buffer member 8e, so the torque occurred in the middle shaft decreases, thereby enabling to enhance the durability of the middle shaft 5. Moreover, the advantage can be exhibited without additionally providing with a sensor such as a steering angle sensor.

In addition, in the embodiment, since the rack shaft 8c includes the buffer member 8e, the time such that the peak value of the transmitting torque occurs in the middle shaft 5 can be delayed as much as the shrinkage allowance of the buffer member 8e at the time of the end contact, that is, reaching the rack end stroke, thereby enabling to more securely decrease the torque occurred in the middle shaft 5.

In the embodiment, although it is described about the case that the peak value of the transmitting torque occurs in the middle shaft 5 with a slight delay after reaching the end contact because the rack shaft 8c includes the buffer member 8e, the invention is not limited to the case, but may be configured such that the peak value of the transmitting torque occurs in the middle shaft 5 with a long delay after reaching the steering limit position by forming the yokes 4a, 4b, 6a, and 6b of the universal joints 4 and 6 fitted to both ends of the middle shaft 5 by a press molding method so that a strength of a high-strength yoke formed by a forging forming method is decreased. In this case, the yoke can be manufactured at low cost relative to the yoke which is manufactured by the forging forming method since the yoke is manufactured by the press molding method and a processor such as a microcomputer having a low process capability can be applied since the peak value of the transmitting torque occurs in the middle shaft 5 with a long delay after reaching the steering limit position, thereby enabling to further reduce a manufacturing cost.

Additionally, in the embodiment, although it is described about the case that the limit duty ratios DuL, DvL, and DwL of the low duty ratio outputted from the limiters 64b are selected instead of the duty ratios DuB, DvB, and DwB, in accordance with the steering torque, outputted from the duty ratio calculators 64a of the duty ratio calculator/limit calculator 64 in such a state that the motor torque change rate $\Delta$Tma is not less than the threshold value $\Delta$Tth, which is judged as the steering limit position, the invention is not limited to the case.

As shown in Fig. 8, the motor torque Tma calculated by the motor torque calculation part 67b is additionally inputted to the selection signal generating section 69, and such a state that the motor torque change rate $\Delta$Tma is not less than the threshold value $\Delta$Tth and the motor torque Tma is also not less than the predetermined value (for example, 2.0 Nm) is set to the steering limit position detection condition or such a state that the motor torque change rate $\Delta$Tma is not less than the threshold value $\Delta$Tth and the motor torque Tma is also maintained in the state of the predetermined value (for example, 2.0 Nm) or so for the predetermined time (for example, 10 msec) is set to the steering limit position detection condition, thereby enabling to more accurately detect such the state of reaching the steering limit position.

In this case, when the vehicle is stopped on such a Belgian road (stone pavement) at the time of the normal steering, sometimes a large vibration load may be inputted from the tire, and when the vibration load is large, the slope of the motor current of the electric motor 12 may be inclined to become large, but large current does not continuously flow due to the vibration load from the tire, thereby enabling to securely prevent the misdetection of the driving state.

In addition, in the first embodiment, although it is described about the case that the threshold value $\Delta$Tth of a fixed value is compared with the torque change rate $\Delta$Tma by the selection signal generating section 69, the invention is not limited to the case.

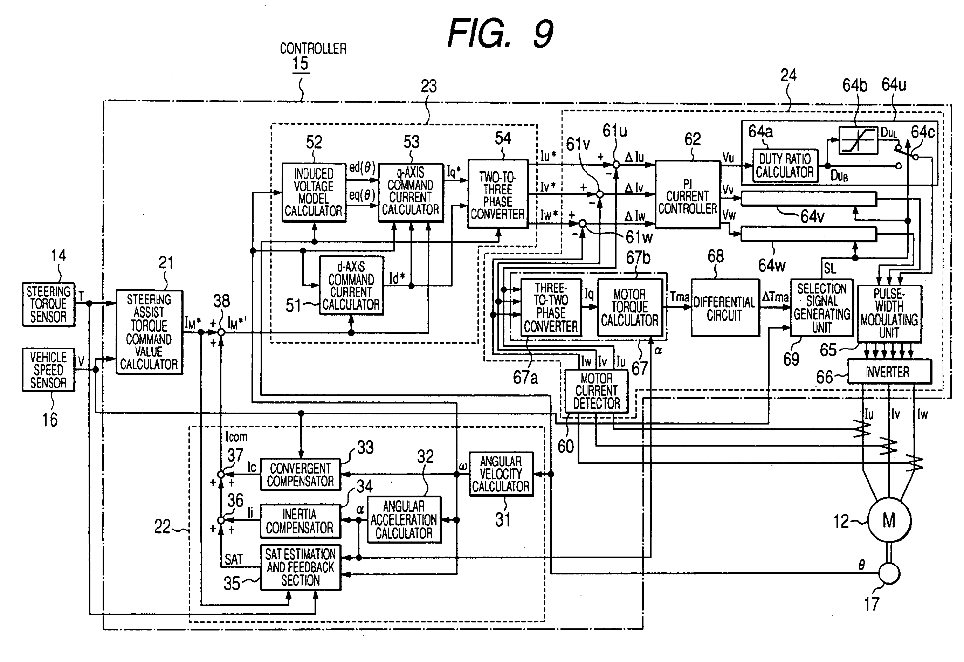

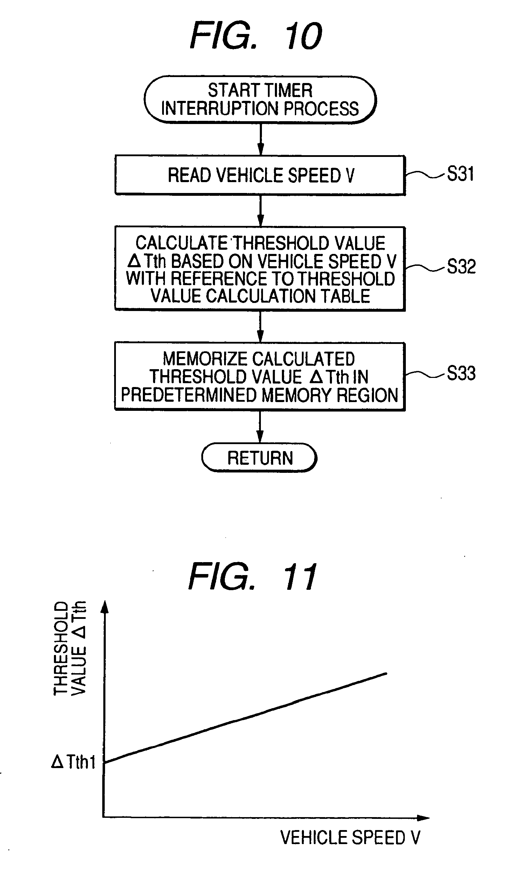

However, As shown in Fig. 9, the invention may be configured such that the vehicle speed V detected by the vehicle speed sensor 16 is inputted to the selection signal generating section 69, and the threshold value $\Delta$Tth for judging the steering limit may be changed in accordance with the vehicle speed V by performing the threshold value setting process shown in Fig. 10 using the selection signal generating section 69.

Namely, the threshold value setting process shown in Fig. 10 is performed every predetermined time (for example, 1 msec) by the timer interruption process. Above all, the vehicle speed V detected by the vehicle speed sensor 16 is read in step S31, and then the process is advanced to step S32. The threshold value $\Delta$Tth is calculated on the basis of the read vehicle speed V with reference to the threshold value calculation table shown in Fig. 11, and the process is advanced to step S33. The calculated threshold value $\Delta$Tth is memorized in a predetermined memory region such as RAM which can be referred in the below-mentioned steering limit position detection process, the timer interruption process is ended, and a predetermined main program is performed.

Here, the threshold value calculation table shown in Fig. 11 is set to the predetermined value $\Delta$Tth1 when the vehicle speed V is "0", and the threshold value $\Delta$Tth is set to increase as the vehicle speed V increases.

The process shown in Fig. 10 corresponds to the process performed in the threshold value setting unit.

As described above, the threshold value $\Delta$Tth for judging the steering limit is set to increase as the vehicle speed V increases, so the steering is not performed up to the end contact state as the vehicle speed becomes fast, thereby enabling to securely prevent the misdetection of the end contact state.

Although it is described about the case that the threshold value calculation table shown in Fig. 11 is used in the threshold value setting process shown in Fig. 10, the invention is not limited to the case. The invention may be configured such that the threshold value $\Delta$Tth is calculated by expressing the characteristic line shown in Fig. 11 as a linear equation and inputting the vehicle speed V to the equation. Additionally, a method of setting the threshold value is not limited to a method of using software, but the threshold value $\Delta$Tth in accordance with the vehicle speed V may be set by using hardware such as a function generator.

Additionally, since the steering limit position is detected at the time when the steering wheel 1 is steered toward the rack stroke end, the steering limit position detection condition may be set to a state a sign of the motor torque Tma coincides with a sign of the motor torque change rate $\Delta$Tma and the motor torque change rate $\Delta$Tma is not less than the threshold value $\Delta$Tth. In this case it is possible to securely prevent a misdetection at the time when the steering wheel 1 is steered in a direction departing from the rack stroke end and the motor torque change rate $\Delta$Tma is not less than the threshold value $\Delta$Tth.

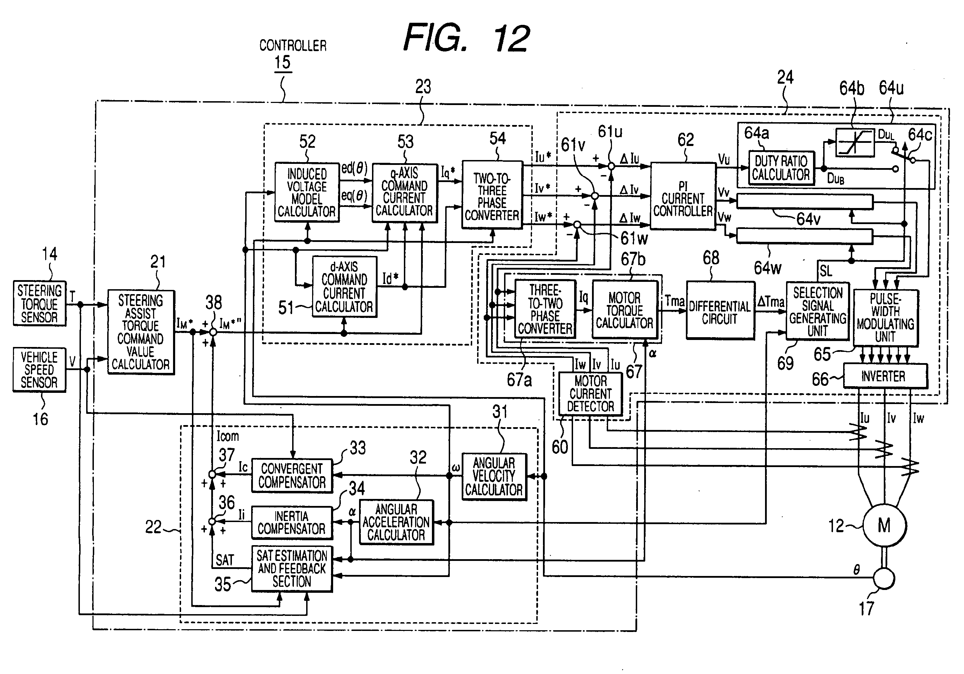

As shown in Fig. 12, the steering limit position detection condition may be set to a state that the motor angular velocity $\omega$ is not less than the predetermined value and the motor torque change rate $\Delta$Tma is not less than the threshold value $\Delta$Tth by supplying the motor angular velocity $\omega$ calculated by the angular velocity calculator 31 instead of the motor torque Tma to the selection signal generating section 69.

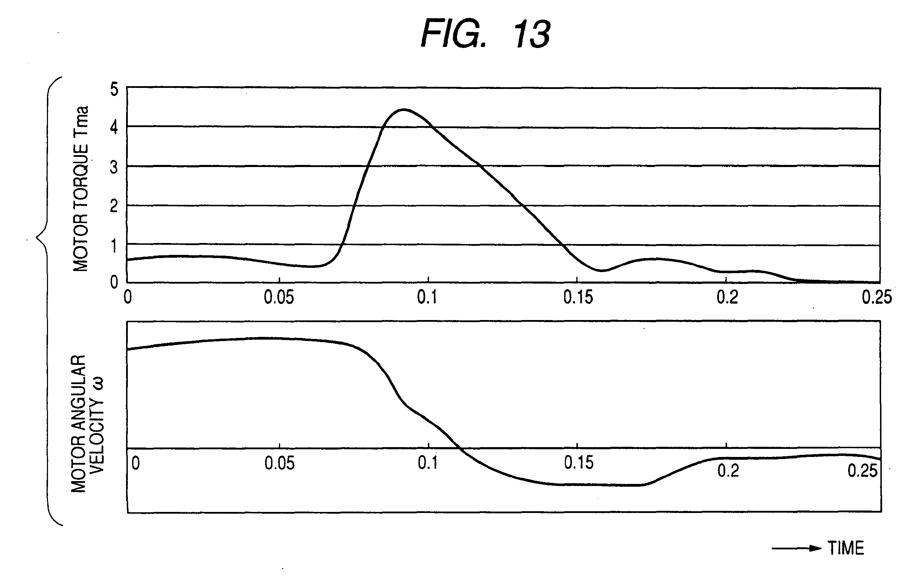

In this case, the motor angular velocity (the motor angular velocity before a predetermined time (for example, 20 msec or so)) just before reaching the steering limit position is used since the motor angular velocity $\omega$ at the time of reaching the steering limit position rapidly decreases as shown in Fig. 13.

As described above, by inputting the motor angular velocity ω to the steering limit position detection condition, it is not necessary to limit the steering assist torque using the fixed duty ratio of a small value since the impact force at the time of reaching the steering limit position is small and the peak value of the transmitting torque transmitted to the middle shaft 5 is small in the state that the motor angular velocity ω is less than the predetermined value, but the peak value of the transmitting torque transmitted to the middle shaft 5 can be securely decreased by limiting the steering assist torque since the impact force at the time of reaching the steering limit position becomes large and the peak value of the transmitting torque transmitted to the middle shaft 5 becomes large in the state that the motor angular velocity ω is not less than the predetermined value.

In addition, in the embodiment, although it is described about the case that the limit duty ratios DuL, DvL, and DwL are selected in the state that the motor torque change rate ΔTma is not less than the threshold value ΔTth, the invention is not limited to the case.

The holding time of the limit duty ratios DuL, DvL, and DwL is set to a predetermined time (for example, 20 msec or so), and the selection switch portions 64c of the duty ratio calculator/limit calculator 64 maybe returned the normal state that the duty ratios DuB, DvB, and DwB in accordance with the voltage command values Vu, Vv, and Vw outputted from the duty ratio calculators 64a are selected after the limit duty ratio state is maintained for the predetermined time.

In this case, when the steering assist torque is continuously limited by the limit duty ratios DuL, DvL, and DwL for a long time, the driver may feel uncomfortable. So, it is desirable that the steering assist torque is continuously limited by the duty ratios DuL, DvL, and DwL the middle shaft 5 for a sufficiently short time to decrease the peak value of the transmitting torque in order to suppress the uncomfortable feeling of the driver.

With such a configuration, it is desirable that the time that the steering assist torque is continuously limited by the limit duty ratios DuL, DvL, and DwL is relatively set to be long since the impact force is large when the motor angular velocity ω is large and the time that the steering assist torque is continuously limited by the limit duty ratios DuL, DvL, and DwL is relatively set to be short since the impact force is small when the motor angular velocity ω is small.

In addition, in the embodiment, although it is described about the case that the electric motor 12 is controlled by supplying the pulse-width modulating signal of the duty ratios DuL, DvL, and DwL relatively having a small value to the inverter 66 at the time of detecting the steering limit position, the invention is not limited to the case.

When the duty ratio of the pulse-width modulating signal with respect to three switching elements constituting the upper arm (or lower arm) of the inverter 66 is set to 0% and the duty ratio of the pulse-width modulating signal with respect to three switching elements constituting the lower arm (or the upper arm) is fixed to 100% by the pulse-width modulating section 65, the coils of the electric motor 12 are made to be a closed circuit in the state of a short circuit so as to be controlled in an electro magnetic brake mode, and thus the inertia force of the rotor of the electric motor 12 may not be transmitted to the middle shaft 5.

In the embodiment, although it is described about the case that the limit duty ratios DuL, DvL, and DwL are set to such as 3%, the invention is not limited to the case, but an optionally fixed duty ratio may be set to correspond to the characteristic of the electric motor 12.

In addition, in the embodiment, although it is described about the case that the d-q axis current command value calculation part 23 includes the two-to-three phase converter 54, the invention is not limited to the case, but it may be configured such that the two-to-three phase converter 54 is removed, the three-to-two phase converter is provided in the output side of the motor current detector 60 instead of the two-to-three phase converter 54, the d-axis current Id and the q-axis current Iq are converted, and two subtractos calculate the deviation between the d-axis target current Id* and the q-axis target current Iq* and the deviation between the d-axis current Id and the q-axis current Iq of the motor.

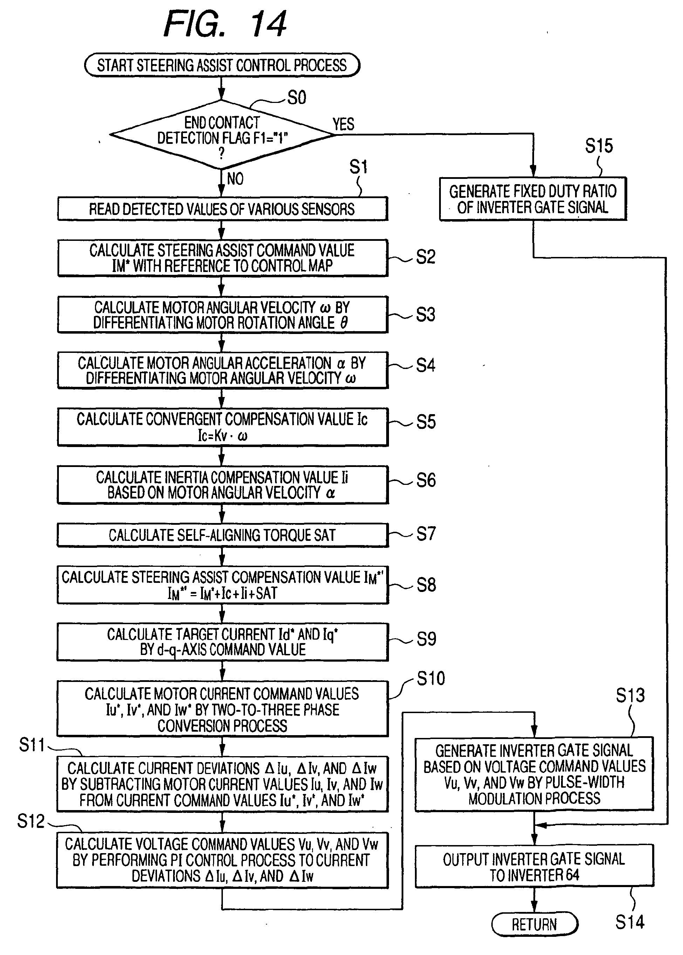

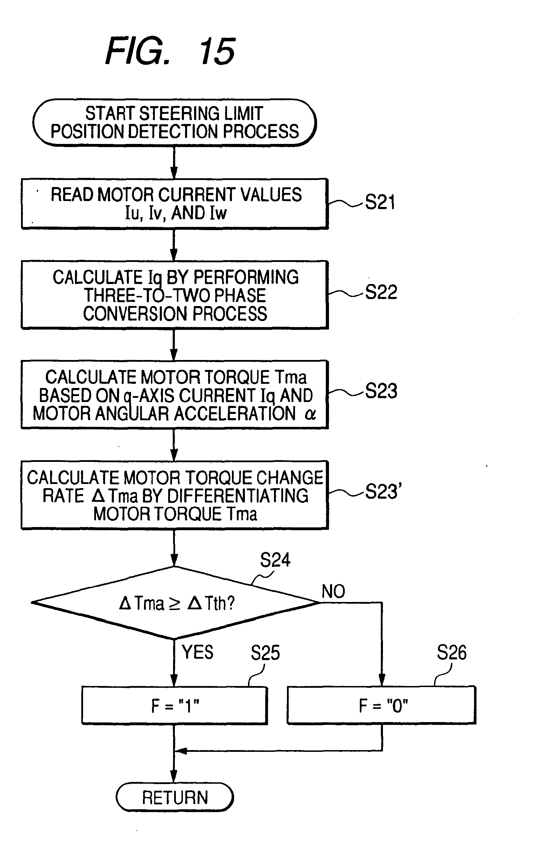

In addition, in the embodiment, although it is described the case that the controller 15 is configured by the hardware, the invention is not limited to the case, but such functions of the steering assist torque command value calculator 21, the command value compensator 22, the d-q axis current command value calculation part 23, the motor control part 24 including the subtractors 61u, 61v, and 61w, the PI current controller 62, the duty control/limit controller 64, the pulse-width modulating section 65, the motor torque detection part 67, the differential circuit 68 as the motor torque change rate detection part, and the selection signal generating section 69 may be processed by a software using a micro computer. As processes of the case, the steering assist control process shown in Fig. 14 and the steering limit position detection process shown in Fig. 15 are allowed to be performed by the micro computer.

Here, the assistant steering limit position control process is performed every predetermined time (for example, 1 msec) by the timer interruption process as shown in Fig. 14. Above all, it is judged whether an end contact detection flag F set by the below-mentioned steering limit position detection process is set to "1" in step S0, which represents reaching the steering limit position, and when the steering limit position detection flag F is reset to "0", the process is advanced to step S1. The detection values of various sensors such as the steering torque sensor 14, the vehicle speed sensor 16, the rotational angle sensor 17, and the current detection circuit 60 are read in step S1, and the process is advanced to step S2. The steering assist torque command value IM* is calculated on the basis of the steering torque T with reference to the steering assist torque command value calculation map shown in Fig. 4 in step S2, and the process is advanced to step S3.

The motor angular velocity ω is calculated by differentiating the motor rotational angle θ in step S3, and the process is advanced to step S4. The motor angular acceleration α is calculated by differentiating the motor angular velocity ω in step S4, and the process is advanced to step S5. The convergent compensation value Ic is calculated by multiplying the motor angular velocity ω by the compensation coefficient Kv set in accordance with the vehicle speed V in the same way as the convergent compensator 33 in step S5, and the process is advanced to step S6.
The inertia compensation value Ii is calculated on the basis of the motor angular acceleration α in the same way as the inertia compensator 34 in step S6, and the process is advanced to step S7. The self-aligning torque SAT is calculated by performing the equation (2) as above on the basis of the motor angular velocity ω and the motor angular acceleration α in the same way as the SAT estimation and feedback section 35 in step S7, and the process is advanced to step S8.

Next, the compensated steering assist torque command value IM*' is calculated by adding the convergent compensation value Ic, the inertia compensation value Ii, and the self-aligning torque SAT calculated in steps S4 to S6 to the steering assist torque command value IM* in step S8, and the process is advanced to step S9. The d-axis target current Id* and the q-axis target current Iq* are calculated by performing the d-q axis command value calculating process which is the same as the d-q axis current command value calculation part 24 to the steering assist torque command compensation value IM*' calculated in step S8, and the process is advanced to step S10. The motor current command values Iu*, Iv*, and Iw* are calculated by the two-to-three phase conversion process in step S10, and the process is advanced to step S11.

Next, the current deviations ΔIu, ΔIv, and ΔIw are calculated by subtracting the motor current values Iu, Iv, and Iw from the motor the current command values Iu*, Iv*, and Iw* in step S11, and the process is advanced to step S12. The voltage command values Vu, Vv, and Vw are calculated by performing the PI control process to the current deviations ΔIu, ΔIv, and ΔIw in step S12, and the process is advanced to step S13. The duty ratios DuB, DvB, and DwB are calculated on the basis of the calculated voltage command values Vu, Vv, and Vw and the inverter gate signal is generated by performing the pulse-width modulation process thereto in step S13, and the process is advanced to step S14. The steering assist control process is ended after the generated inverter gate signal is outputted to the inverter 66 in step S14, and a predetermined main program is performed.

On the other hand, when the result of the judgment of step S0 is such that the steering limit position detection flag F is set to "1", it is judged as reaching the steering limit position, and the process is advanced to step S15. In the same way as the above-mentioned limiter 64b, the limit duty ratios DuL, DvL, and DwL set to 3% are calculated and the pulse-width modulation process is performed thereto so as to generate the inverter gate signal, and then the process is advanced to step S14.

Additionally, the steering limit position detection process is performed every predetermined time (for example, 1 msec) by the timer interruption process as shown in Fig. 15. Above all, the motor current values Iu, Iv, and Iw inputted from the motor current detector 60 in step S21, and the process is advanced to step S22. The q-axis current Iq is calculated by performing the three-to-two phase conversion process to the read motor current values Iu, Iv, and Iw in S22, and the process is advanced to step S23.

In step S23, the motor torque Tma is calculated on the basis of the equation (3) using the calculated-q axis current Iq and the motor angular acceleration α calculated in step S4, and the process is advanced to step S23'. Next, the motor torque change rate ΔTma is calculated by differentiating the calculated motor torque Tma in step S23', and the process is advanced to step S24. It is judged whether the calculated motor torque change rate ΔTma is not less than the threshold value ΔTth in step S24. Here, when the calculated motor torque change rate ΔTma is not less than the threshold value ΔTth, it is judged as the steering limit position, the process is advanced to step S25, the steering limit position detection flag F is set to "1", and a predetermined main program is performed after ending the timer interruption process. When the calculated motor torque change rate ΔTma is less than the threshold value ΔTth, it is not judged as the steering limit position, the process is advanced to step S26, the steering limit position detection flag F is reset to "0", and a predetermined main program is performed after ending the timer interruption process.

In the processes shown in Figs. 14 and 15, the process in step S2 shown in Fig. 14 corresponds to the processes of the current command value calculation part, the processes in steps S3 to S14 shown in Fig. 14 and the inverter 66 correspond to the processes of the motor control part, the processes in steps S21 to S23 shown in Fig. 15 correspond to the processes of the motor torque detection part, the process in step S23' corresponds to the processes of the motor torque change rate detection part, and the processes in steps S24 to S26 and steps S0 and S16 shown in Fig. 14 correspond to the processes of the duty ratio limiting part.

As described above, the steering assist control process shown in Fig. 14 and the steering limit position detection process shown in Fig. 15 are performed by the micro computer, in the same way as the above-mentioned the embodiment, the motor current values Iu, Iv, and Iw outputted from the inverter 66 is made to have a small value by limiting the duty ratio of the inverter gate signal supplied to the inverter 66 to have a small value at the time of reaching the steering limit position such that the rack shaft 8c reaches the rack stroke end (the end contact) or the tire contacts with a curbstone and the like, so that the steering assist torque generated by the electric motor 12 is decreased, whereby the peak value of the torque transmitted to the middle shaft 5 can be decreased, thereby enabling to enhance the durability of the middle shaft 5.

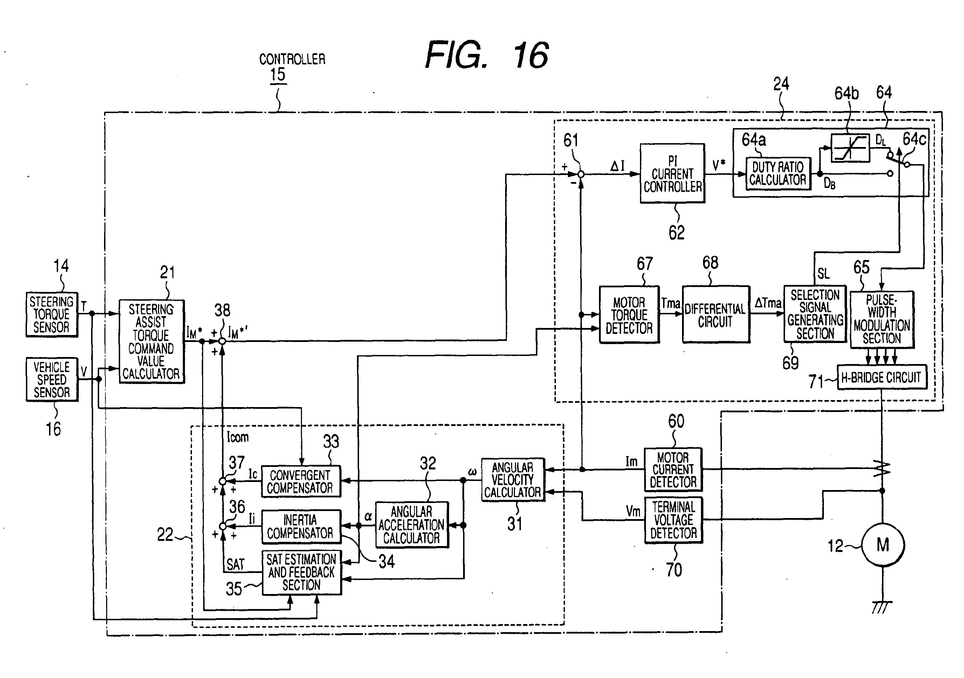

In addition, in the embodiment, although it is described about the case that the invention is applied to a brushless motor, the invention is not limited to the case. In the case that the invention is applied to a brush motor as shown in Fig. 16, it may be configured such that the motor angular velocity ω is calculated by performing the following equation (4) to the detected motor current value Im outputted from the motor current detector 60 and a motor terminal voltage Vm outputted from a terminal voltage detector 70 by the angular velocity calculator 31, the torque command value IM*' is directly supplied to the motor control part 24 by removing the d-q axis command value calculator 23, the motor control part 24 is configured by one subtractor 61, one PI current controller 62, and one duty ratio calculator/limit calculator 64, the motor torque Tma is obtained by the motor torque detection part 67 on the basis of the motor current Im and the rotational angular acceleration α, the motor torque change rate ΔTma is calculated by the differential circuit 68 as the motor torque change rate detection part differentiating the motor torque Tma, the selection signal SL of the logical value "0" or "1" is outputted in accordance with whether the motor torque change rate ΔTma is less than the threshold value ΔTth by the selection signal generating section 69, and the inverter 66 is changed to a H-bridge circuit 71.

$$ω = (Vm - Im·Rm) / K0 … (4)$$

Here, Rm represents the winding resistance of the motor and K0 represents a constant of the electromotive force of the motor.

In the embodiment, although it is described about the case that the duty ratio DuB is calculated by the duty ratio calculator 64a of the duty ratio calculator/limit calculator 64, the limit duty ratio DuL is generated by the limiter 64b, and one of them is selected by the duty ratio calculator/limit calculators 64u, 64v, and 64w in the selection switch portions 64c, the invention is not limited to the case, but may be configured such that voltage command values Vu, Vv, and Vw and V* is limited to have predetermined values by the limiter, the voltage command values Vu, Vv, and Vw and V* and the limit voltage command values VuL, VvL, and VwL and V* are selected by the selection switch portion, and the selected command values are calculated into the duty ratios Du, Dv, Dw, and D by the duty ratio calculator.

In addition, in the embodiment, although it is described about the case that the motor torque detection part 67 is configured to detect the motor torque Tma on the basis of the motor current Iq and Im and the motor the rotational angular acceleration α, the invention is not limited to the case. It may be configured such that the motor torque Tma is directly detected by disposing a torque sensor such as a magnetostrictive torque sensor on the torque transmitting shaft such as the output shaft of the electric motor 12 and the input and output shafts of the deceleration gear 11.

[Second Embodiment]

Hereinafter, a second embodiment in accordance with the invention will be described with reference to the drawings.

A basic configuration of the second embodiment in accordance with the invention is the same as that of the first embodiment. A member related to the first embodiment and the same member as the first embodiment will be marked with the same reference numerals and signs and a specific description thereof will be omitted.

In the second embodiment in accordance with the invention, the configuration of the motor current controller 24 is different from that of the first embodiment.

More specifically, a configuration of a current change rate detection part 167 is different from a configuration of the current detector 67 of the first embodiment. Hereinafter, those configuration different from the first embodiment will be described in detail.

The motor current controller 24 includes the pulse-width modulating section 65, the inverter 66, the current change rate detection part 167 for calculating a current change rate ΔIq on the basis of motor current Iu, Iv and Iw detected by the motor current detector 60, and the selection signal generating section 69 for outputting the selection signal SL of the logical value "0" in the state that the current change rate ΔIq calculated by the current change rate detection part 167 is less than the threshold value ΔIth for judging the steering limit and the selection signal SL of the logical value "1" in the state that it is not less than the threshold value ΔIth. Here, the pulse-width modulating section 65 and the inverter 66 are the same configuration components as the first embodiment.

Here, the current change rate detection part 167 is configured by a three-to-two phase converter 167a for converting the motor current values Iu, Iv and Iw detected by the motor current detector 60 into the d-axis current Id and the q-axis current Iq and a differential circuit 167b for calculating a current change rate ΔIq by differentiating the q-axis current Iq converted by the three-to-two phase converter 167a.

Additionally, the selection signal generating section 69 judges whether the current change rate ΔIq calculated by the current change rate detection part 167 is not less than the threshold value ΔIth (for example, 3500 A/sec) for judging the current of a large slope that does not occur at the time of a normal steering but may occur at the time of reaching the steering limit such that the rack shaft 8c of the steering gear 8 reaches the rack stroke end or a tire can not perform its actual steering road wheel due to contacting with a curbstone or the like. The selection signal generating section 69 outputs the selection signal SL of the logical value "0" in the state that the current change rate ΔIq calculated by the current change rate detection part 167 is less than the threshold value ΔIth since it is judged that the rack shaft 8c does not reach the rack stroke end, and outputs the selection signal SL of the logical value "1" in the state that the current change rate ΔIq calculated by the current change rate detection part 167 is not less than the threshold value ΔIth since it is judged that the rack shaft 8c reaches the rack stroke end.

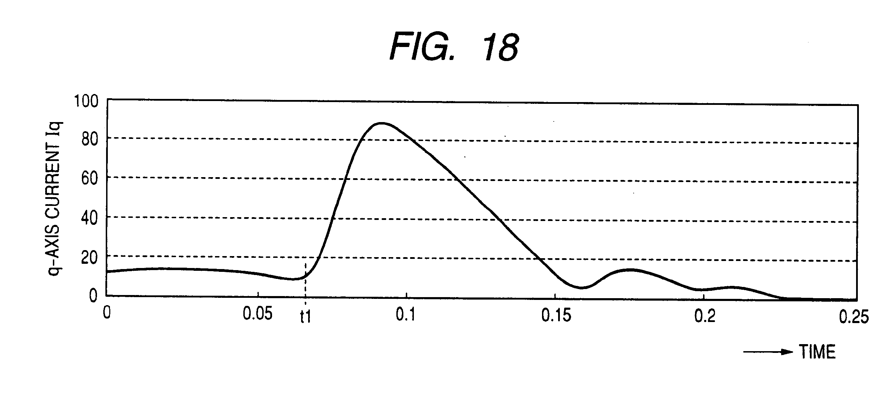

Here, as shown in Fig. 18 in which a q-axis current wave form is outputted from the three-to-two phase converter 167a in the state where the rack shaft 8c reaches the steering limit position, assuming that the rack shaft 8c reaches the steering limit position at the time point t1, the movement of the rack shaft 8c is stopped in the direction of the vehicle width. Due to this, the rotation of the electric motor 12 is stopped in terms of the pinion shaft 7, the universal joint 6, the middle shaft 5, the universal joint 4, the output shaft 2b of the steering shaft 2, and the deceleration gear 11, whereby the motor current values Iu, Iv, and Iw supplied to the electric motor 12 rapidly increases. For this reason, the q-axis current Iq increases with a large slope (4000 A/sec or so in case of an example shown in Fig. 18) that does not occur at the time of a normal steering. After this, the motor current values Iu, Iv, and Iw gradually decrease by an operation of an over-current preventing circuit, whereby the q-axis current Iq gradually decreases. With such a configuration, it is possible to securely detect the steering limit position by setting the threshold value ΔIth of the current change rate ΔIq to the predetermined value (for example, 3500 A/sec or so) .

Next, an operation of the second embodiment will be described. In order to start driving the vehicle, a power is inputted to the controller 15 by turning on an ignition switch IG, whereby a steering assist control process is performed. Accordingly, the steering torque T detected by the steering torque sensor 14, the vehicle speed V detected by the vehicle speed sensor 16, the detected motor current values Iu, Iv, and Iw detected by the motor current detectors 60u, 60v, and 60w, and the motor rotational angle θ detected by the rotational angle sensor 17 are supplied to the controller 15.

Thus, the steering assist torque command value calculator 21 calculates the steering assist torque command value IM* on the basis of the steering torque T and the vehicle speed V with reference to the steering assist command value calculation map shown in Fig. 4.

On the other hand, the motor rotational angle θ detected by the rotational angle sensor 17 is inputted to the angular velocity calculator 31, whereby the motor angular velocity ω is calculated. The motor angular velocity ω is inputted to the angular acceleration calculator 32, whereby the motor angular acceleration α is calculated.

Additionally, the convergent compensator 33 calculates the convergent compensation value Ic on the basis of the motor angular velocity ω, and the inertia compensator 34 calculates the inertia compensation value Ii on the basis of the motor angular acceleration. Also, the SAT estimation and feedback section 35 calculates the self-aligning torque SAT on the basis of the motor angular velocity ω and motor angular acceleration α, the adders 36 and 37 calculates the command value compensation value Icom by adding the convergent compensation value Ic, the inertia compensation value Ii, and the self-aligning torque SAT on another, and the adder 38 calculates the compensated steering assist torque command value compensation value IM*' by adding the command value compensation value Icom to the steering assist torque command value IM*.

The calculated compensated steering assist torque command value compensation value IM*' is supplied to the d-q axis current command value calculation part 23.

At this time, the steering torque T detected by the steering torque sensor 14 is "0" and the vehicle speed V detected by the vehicle speed sensor 16 is also "0" in the state where the vehicle is stopped and the steering wheel 1 is not steered, whereby the steering assist torque command value IM* calculated by the steering assist torque command value calculator 21 is "0".

On the other hand, since the electric motor 12 is stopped, the motor current values Iu, Iv, and Iw calculated by the motor current detector 60 is "0", and the q-axis current Iq into which the motor current values Iu, Iv, and Iw are converted by the three-to-two phase converter 167a is "0". For this reason, the current change rate ΔIq detected by the current change rate detection part 167 is "0", and the current change rate ΔIq of "0" is supplied to the selection signal generating section 69. Since the current change rate ΔIq is less than the threshold value ΔIth, the selection signal SL of the logical value "0" is outputted to the duty ratio calculator/limit calculators 64u, 64v, and 64w. With such a configuration, the duty ratio calculator/limit calculators 64u, 64v, and 64w select the duty ratios DuB, DvB, and DwB outputted from the duty ratio calculators 64a, and the pulse-width modulating signal driving the gates of the switching elements of an upper arm and a lower arm constituting the inverter 66 are supplied to the inverter 66 from the pulse-width modulating section 65 by inputting the duty ratios DuB, DvB, and DwB to the pulse-width modulating section 65.

At this time, as described above, the compensated steering assist torque command value IM*' is "0", and the compensated torque command value IM*' is supplied to the d-q axis current command value calculation part 23. Accordingly, d-axis target current Id* and q axis target current Iq* are calculated by the d-q axis current command value calculation part 23 performing a command value calculation in d-q axis coordinate system on the basis of the motor rotational angle θ and the motor angular velocity ω, and the d-axis target current Id* and the q-axis target current Iq* are converted into the three-phase current command values Iu*, Iv*, and Iw* of "0" by the two-to-three phase converter 54 and the resultant values are outputted to the motor current controller 24.

In the motor current controller 24, since the motor current values Iu, Iv, and Iw detected by the motor current detector 60 are "0", the current deviations ΔIu, ΔIv, and ΔIw outputted from the subtractors 61u, 61v, and 61w are "0, and the voltage command values Vu, Vv, and Vw outputted from the PI current controller 62 are "0", the duty ratios DuB, DvB, and DwB outputted from the duty ratio calculator/limit calculator 64 become 0%. Additionally, since the pulse-width modulating signal is supplied to the inverter 66 from the pulse-width modulating section 65, the motor current values Iu, Iv, and Iw outputted from the inverter 66 is "0", and thus the stop state of the electric motor 12 is continued.

When a steer without driving, that is, steering the steering wheel 1 to the right side (or the left side) is performed in the state that the electric motor 12 is stopped, the steering torque T in accordance with a steering direction is detected by the steering torque sensor 14, and the steering torque T is supplied to the controller 15. Accordingly, the steering assist torque command value IM* of the inside characteristic curve which promptly obtains a large value in accordance with the increase of the steering torque T is selected by the steering assist torque command value calculator 21 because the vehicle speed V is "0", and then the steering assist torque command value IM* is outputted to the adder 38.

With such a configuration, the command compensation value Icom calculated by the command value compensator 22 is added thereto by the adder 38 so as to calculate the compensated steering assist torque command value IM*, and the compensated steering assist torque command value IM*' is supplied to the d-q axis current command value calculation part 23.

The d-axis target current Id* and the q-axis target current Iq* in accordance with the compensated torque command value IM*' are calculated by the d-q axis current command value calculation part 23, and the resultant values are converted into the three-phase current command values Iu*, Iv*, and Iw* by the two-to-three phase converter 54 so as to be outputted to the motor current controller 24.

Thus, in the motor current controller 24, since the motor current values Iu, Iv, and Iw detected by the motor current detector 60 are "0", the current command values Iu*, Iv*, and Iw* as the current deviations ΔIu, ΔIv, and ΔIw outputted from the subtractors 61u, 61v, and 61w are supplied to PI current controller 62, and then the voltage command values Vu, Vv, and Vw are calculated by the PI control process of the PI current controller 62 and outputted to the duty ratio calculator/limit calculators 64u, 64v, and 64w.

In this state, since the current change rate ΔIq calculated by the current change rate detection part 167 is maintained as "0", the selection signal SL of the logical value "0" is continuously outputted from the selection signal generating section 69, the duty ratios DuB, DvB, and DwB in accordance with the voltage command values Vu, Vv, and Vw outputted from the duty ratio calculators 64a are selected by the selection switch portions 64c in the duty ratio calculator/limit calculators 64u, 64v, and 64w, the pulse-width modulating signal in accordance with the duty ratios DuB, DvB, and DwB are supplied to the inverter 66 from the pulse-width modulating section 65. With such a configuration, the motor current values Iu, Iv, and Iw are outputted from the inverter 66 so as to rotationally drive the electric motor 12, and the steering assist torque in accordance with the steering torque T is generated so as to be transmitted to the output shaft 2b of the steering shaft 2 in terms of the deceleration gear 11, thereby enabling the steering to be easily performed in the state of the steer without driving.

At this time, although the motor current values Iu, Iv, and Iw rapidly increase, the current change rate ΔIq is less than the current change rate at the time of reaching the steering limit position and less than the threshold value ΔIth as described above. Accordingly, the rotational angular velocity α is generated, but the motor torque change rate ΔTma at this time is less than the motor torque change rate at the time of reaching the steering limit position and less than the threshold value ΔTth as described above. Therefore, the selection signal SL of the logical value "0" is continuously outputted from the selection signal generating section 69, so the duty ratios DuB, DvB, and DwB in accordance with the voltage command values Vu, Vv, and Vw outputted from the duty ratio calculators 64a are continuously selected by the selection switch portions 64c of the duty ratio calculator/limit calculator 64.

After that, when the vehicle is started, the vehicle speed V detected by the vehicle speed sensor 16 increases. So, when the steering wheel 1 is steered at the time of driving, the steering assist torque command value calculated by the steering assist torque command value calculator 21 selects the outside characteristic curve as the vehicle speed V becomes faster in such the map shown in Fig. 4, whereby an increment of the steering assist torque command value IM* set to correspond to an increase of the steering torque T decreases and the steering assist torque generated by the electric motor 12 has a small value relative to the state of the steer without driving, thereby enabling to generate the optimal steering assist torque in accordance with the vehicle speed V.

Incidentally, when the steering wheel 1 is promptly steered to right or left up to the steering limit position in the state of the steer without driving or driving at low speed to enter a garage or the like, the motor current values Iu, Iv, and Iw in accordance with the steering torque T detected by the steering torque sensor 14 are generated by the controller 15 so as to be supplied to the electric motor 12 as described above before reaching the steering limit position, thereby enabling to easily perform the steering.

At this time, it becomes a state that the steering torque T is large, and the duty ratio of the pulse-width modulating signal outputted from the pulse-width modulating section 65 is substantially close to 100% since it is the steering at the time of the steer without driving or driving at extremely low speed.

With such the state, when the buffer member 8e of the rack shaft 8c reaches the rack stroke end which is brought into contact with the stopper member 8f or that reaches the steering limit position in such a reason that the tire is brought into contact with the curbstone or the like, the movement of the rack shaft 8c is stopped, whereby revolutions of the pinion 8b, pinion shaft 7, the universal joint 6, the middle shaft 5, the universal joint 4, and the output shaft 2b of the steering shaft 2 are stopped, whereby the rotation of the electric motor 12 is stopped by the deceleration gear 11.

At this time, in the controller 15, since it is in the state that the duty ratio of the pulse-width modulating signal outputted from the pulse-width modulating section 65 is substantially close to 100%, the motor current values Iu, Iv, and Iw outputted from the inverter 66 rapidly increase, and the motor current values Iu, Iv, and Iw are detected by the motor current detector 60 are supplied to the current change rate detection part 167. With such a configuration, the q-axis current Iq outputted from the three-to-two phase converter 167a increases with a large slope as shown in Fig. 18 and the current change rate ΔIq outputted from the differential circuit 167b becomes to be not less than the threshold value ΔIth.

Since the current change rate ΔIq which is not less than the threshold value ΔIth is supplied to the selection signal generating section 69, the selection signal SL of the logical value "1" is outputted to the selection switch portions 64c of the duty ratio calculator/limit calculator 64 from the selection signal generating section 69. With such a configuration, the limit duty ratios DuL, DvL, and DwL of a low duty ratio outputted from the limiters 64b are selected by the selection switch portions 64c and supplied to the pulse-width modulating section 65, and the pulse-width modulating signal in accordance with the limit duty ratios DuL, DvL, and DwL are supplied to the inverter 66 by the pulse-width modulating section 65.

Thus, since the motor current values Iu, Iv, and Iw outputted from the inverter 66 decrease, the steering assist torque generated by the electric motor 12 decreases and a peak value of the torque can be suppressed as shown in Fig. 7 in which peak values of the torque transmitted to the middle shaft 5 are represented by characteristic curves L1 and L2, and the characteristic curve L1 marked with a solid line at the time of performing the duty ratio limit control is compared with a characteristic curve L2 marked with a dashed line at the time of not performing the duty ratio limit control, thereby enabling to enhance the durability of the torque transmitting member of the middle shaft and the like.

Moreover, the current change rate ΔIq is calculated on the basis of the motor current values Iu, Iv, and Iw detected by the motor current detector 60, and the steering limit position such as the end contact state and the state that a tire is brought into contact with a curbstone is detected by comparing the calculated result and the threshold value ΔIth, whereby the steering limit position state can be detected in a short time (for example, 10 msec or so) after reaching the steering limit position.

Since the steering assist torque generated by the electric motor 12 can be limited in a short time (for example, 20 msec or so) after the steering limit position is detected, the steering assist torque can be limited within a time (for example, 30 msec or so) that the peak value of the transmitting torque occurs in the middle shaft 5 after reaching the steering limit position in the case that the rack shaft 8c is not provided with the buffer member 8e, so the torque occurred in the middle shaft decreases, thereby enabling to enhance the durability of the middle shaft 5. Moreover, the advantage can be exhibited without additionally providing with a sensor such as a steering angle sensor.

In addition, in the embodiment, since the rack shaft 8c includes the buffer member 8e, the time such that the peak value of the transmitting torque occurs in the middle shaft 5 can be delayed as much as the shrinkage allowance of the buffer member 8e at the time of the end contact, that is, reaching the rack end stroke, thereby enabling to more securely decrease the torque occurred in the middle shaft 5.

In the embodiment, although it is described about the case that the peak value of the transmitting torque occurs in the middle shaft 5 with a slight delay after reaching the end contact because the rack shaft 8c includes the buffer member 8e, the invention is not limited to the case, but may be configured such that the peak value of the transmitting torque occurs in the middle shaft 5 with a long delay after reaching the steering limit position by forming the yokes 4a, 4b, 6a, and 6b of the universal joints 4 and 6 fitted to both ends of the middle shaft 5 by a press molding method so that a strength of a high-strength yoke formed by a forging forming method is decreased. In this case, the yoke can be manufactured at low cost relative to the yoke which is manufactured by the forging forming method since the yoke is manufactured by the press molding method and a processor such as a microcomputer having a low process capability can be applied since the peak value of the transmitting torque occurs in the middle shaft 5 with a long delay after reaching the steering limit position, thereby enabling to more reduce a manufacturing cost.

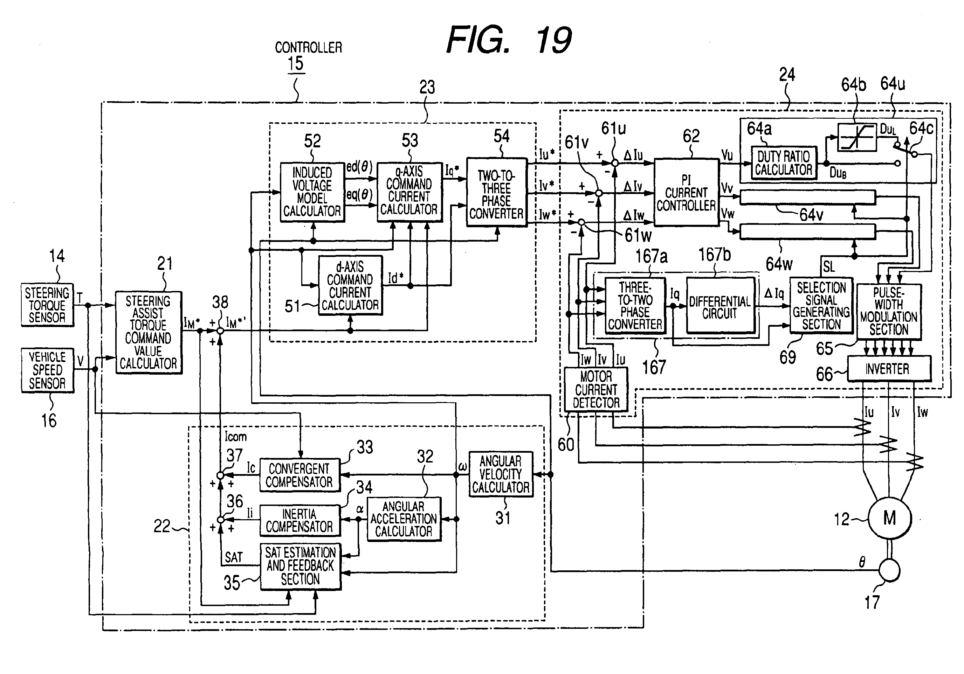

Additionally, in the embodiment, although it is described about the case that the limit duty ratios DuL, DvL, and DwL of the low duty ratio outputted from the limiters 64b are selected instead of the duty ratios DuB, DvB, and DwB, in accordance with the steering torque, outputted from the duty ratio calculators 64a of the duty ratio calculator/limit calculator 64 in such a state that the current change rate ΔIq is not less than the threshold value ΔIth, which is judged as the steering limit position, the invention is not limited to the case. As shown in Fig. 19, the q-axis current Iq converted by the three-to-two phase converter 167a is additionally inputted to the selection signal generating section 69, and such a state that the current change rate ΔIq is not less than the threshold value ΔIth and the q-axis current Iq is also not less than the predetermined value (for example, 40A) is set to the steering limit position detection condition or such a state that the current change rate ΔIq is not less than the threshold value ΔIth and the q-axis current Iq is also maintained in the state of the predetermined value (for example, 40A) or so for the predetermined time (for example, 10 msec) is set to the steering limit position detection condition, thereby enabling to more accurately detect such the state of reaching the steering limit position. In this case, when the vehicle is stopped on such a Belgian road at the time of the normal steering, sometimes a large vibration load may be inputted from the tire, and when the vibration load is large, the slope of the motor current of the electric motor 12 may be inclined to become large, but large current does not continuously flow due to the vibration load from the tire, thereby enabling to securely prevent the misdetection of the driving state.

Additionally, since the steering limit position is detected at the time when the steering wheel 1 is steered toward the rack stroke end, the steering limit position detection condition may be set to a state a sign of the q-axis current Iq coincides with a sign of the current change rate ΔIq and the current change rate ΔIq is not less than the threshold value ΔIth. In this case it is possible to securely prevent a misdetection at the time when the steering wheel 1 is steered in a direction departing from the rack stroke end and the current change rate ΔIq is not less than the threshold value ΔIth.

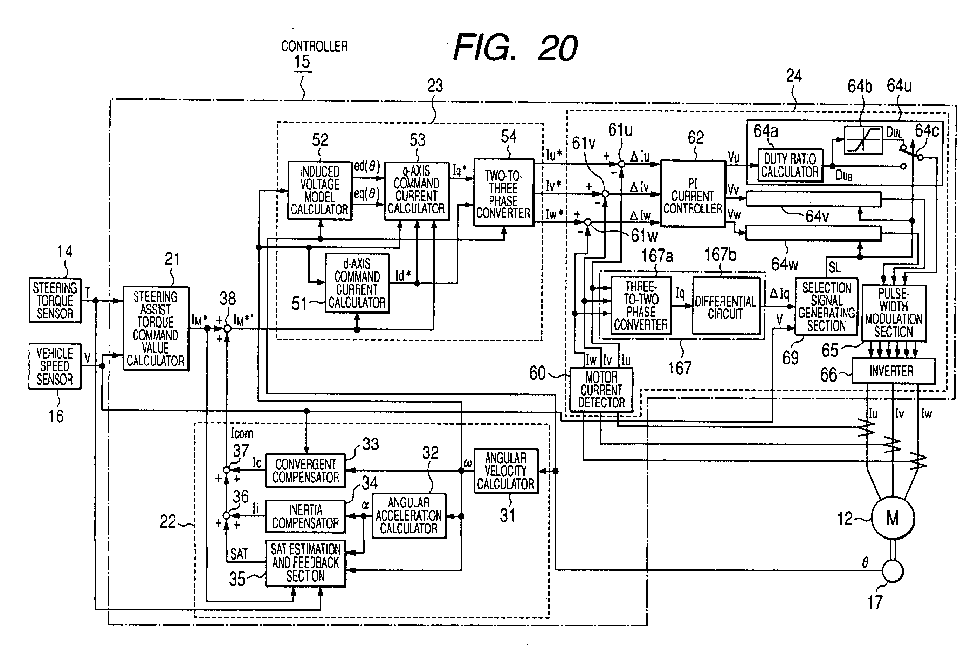

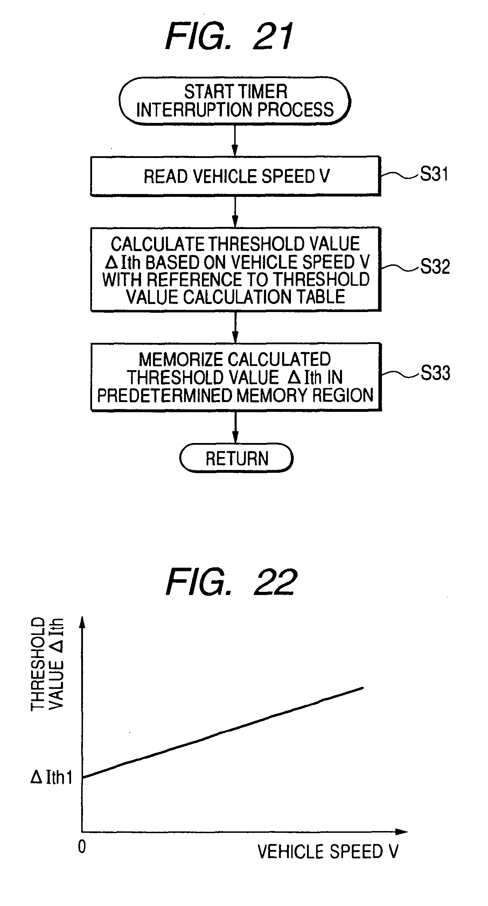

In addition, in the embodiment, although it is described about the case that the threshold value ΔIth having a fixed value is compared with the current change rate ΔIq by the selection signal generating section 69, the invention is not limited to the case. However, as shown in Fig. 20, the invention may be configured such that the vehicle speed V detected by the vehicle speed sensor 16 is inputted to the selection signal generating section 69, the threshold value setting process shown in Fig. 21 is performed by the selection signal generating section 69, and the threshold value ΔIth for judging the steering limit is changed with the vehicle speed V.

Namely, the threshold value setting process shown in Fig. 21 is performed every predetermined time (for example, 1 msec) by the timer interruption process. Above all, the vehicle speed V detected by the vehicle speed sensor 16 is read in step S31, and the process is advanced to step S32. The threshold value ΔIth is calculated on the basis of the read vehicle speed V with reference to the threshold value calculation table shown in Fig. 22, and the process is advanced to step S33. The calculated threshold value ΔIth is memorized in a predetermined memory region such as RAM which can be referred in the below-mentioned steering limit position detection process, the timer interruption process is ended, and a predetermined main program is performed.

Here, the threshold value calculation table shown in Fig. 22 is set to the predetermined value ΔIth1 when the vehicle speed V is "0", and the threshold value ΔIth is set to increase as the vehicle speed V increases. The threshold value setting unit corresponds to the process shown in Fig. 21.

As described above, the threshold value ΔIth for judging the steering limit is set to increase as the vehicle speed V increases, so the steering is not performed up to the end contact state as the vehicle speed becomes fast, thereby enabling to securely prevent the misdetection of the end contact state.

Although it is described about the case that the threshold value calculation table shown in Fig. 22 is used in the threshold value setting process shown in Fig. 21, the invention is not limited to the case, but the invention may be configured such that the threshold value ΔIth is calculated by expressing the characteristic line shown in Fig. 22 as a linear equation and inputting the vehicle speed V to the equation. Additionally, a method of setting the threshold value is not limited to a method of using software, but the threshold value ΔTth in accordance with the vehicle speed V may be set by using hardware such as a function generator.

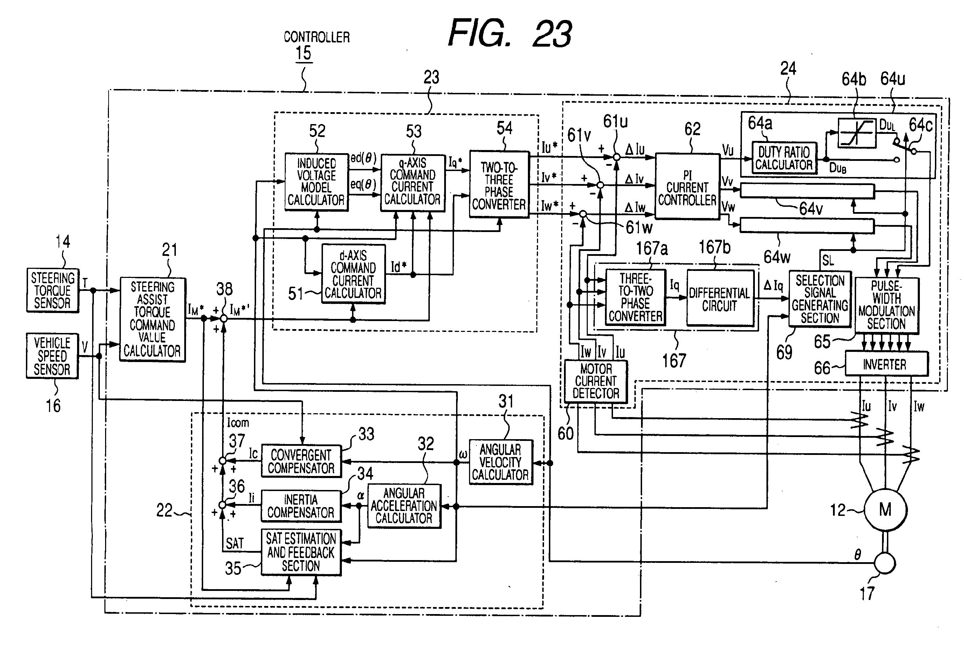

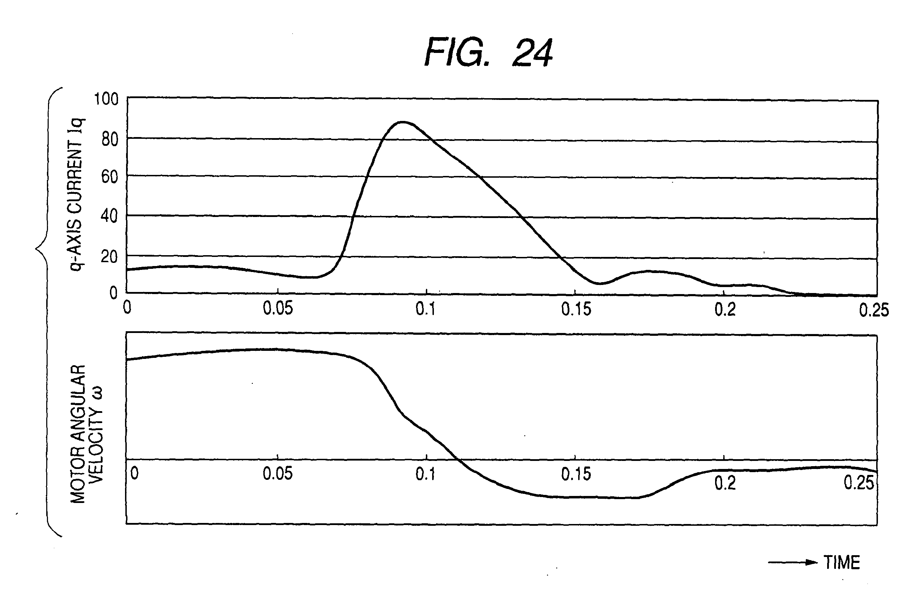

In addition, as shown in Fig. 23, the steering limit position detection condition may be set to a state that the motor angular velocity ω is not less than the predetermined value and the current change rate ΔIq is not less than the threshold value ΔIth by supplying the motor angular velocity ω calculated by the angular velocity calculator 31 instead of the q-axis current Iq to the selection signal generating section 69. In this case, the motor angular velocity (the motor angular velocity before a predetermined time (for example, 20 msec or so)) just before reaching the steering limit position is used since the motor angular velocity ω at the time of reaching the steering limit position rapidly decreases as shown in Fig. 24. As described above, by inputting the motor angular velocity ω to the steering limit position detection condition, it is not necessary to limit the steering assist torque using the fixed duty ratio of a small value since the impact force at the time of reaching the steering limit position is small and the peak value of the transmitting torque transmitted to the middle shaft 5 is small in the state that the motor angular velocity ω is less than the predetermined value, but the peak value of the transmitting torque transmitted to the middle shaft 5 can be securely decreased by limiting the steering assist torque since the impact force at the time of reaching the end contact becomes large and the peak value of the transmitting torque transmitted to the middle shaft 5 becomes large in the state that the motor angular velocity ω is not less than the predetermined value.

In addition, in the embodiment, although it is described about the case that the limit duty ratios DuL, DvL, and DwL are selected in the state that the current change rate ΔIq is not less than the threshold value ΔIth, the invention is not limited to the case. The holding time of the limit duty ratios DuL, DvL, and DwL is set to a predetermined time (for example, 20 msec or so), and the selection switch portions 64c of the duty ratio calculator/limit calculator 64 may be returned the normal state that the duty ratios DuB, DvB, and DwB in accordance with the voltage command values Vu, Vv, and Vw outputted from the duty ratio calculators 64a are selected after the limit duty ratio state is maintained for the predetermined time. In this case, when the steering assist torque is continuously limited by the limit duty ratios DuL, DvL, and DwL for a long time, the driver may feel uncomfortable. So, it is desirable that the steering assist torque is continuously limited by the duty ratios DuL, DvL, and DwL the middle shaft 5 for a sufficiently short time to decrease the peak value of the transmitting torque in order to suppress the uncomfortable feeling of the driver. With such a configuration, it is desirable that the time that the steering assist torque is continuously limited by the limit duty ratios DuL, DvL, and DwL is relatively set to be long since the impact force is large when the motor angular velocity ω is large and the time that the steering assist torque is continuously limited by the limit duty ratios DuL, DvL, and DwL is relatively set to be short since the impact force is small when the motor angular velocity ω is small.

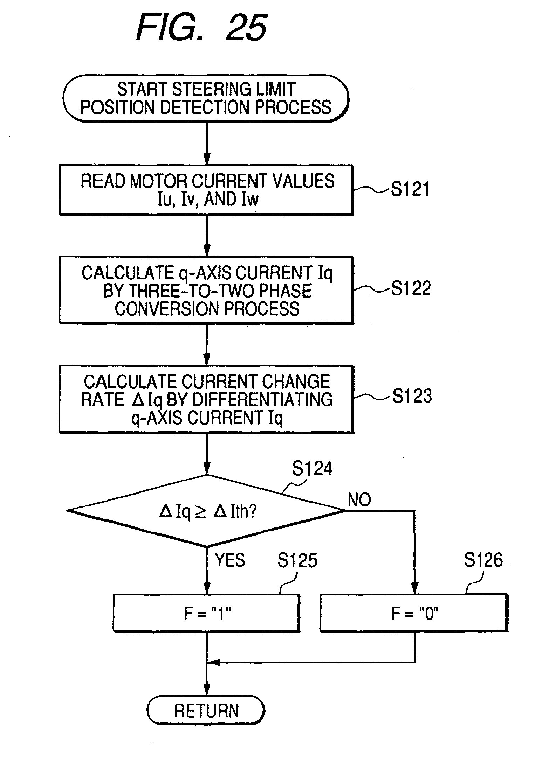

In addition, in the embodiment, although it is described the case that the controller 15 is configured by the hardware, the invention is not limited to the case, but such functions of the steering assist torque command value calculator 21, the command value compensator 22, the d-q axis current command value calculation part 23, the motor control part 24 including the subtractors 61u, 61v, and 61w, the PI current controller 62, the duty control/limit controller 64, the pulse-width modulating section 65, the current change rate detection part 167, and the selection signal generating section 69 may be processed by a software using a micro computer. As processes of the case, the steering assist control process shown in Fig. 14 and the steering limit position detection process shown in Fig. 25 are allowed to be performed by the micro computer.

Here, the assistant steering limit position control process is performed in the same way as the first embodiment as shown in Fig. 14.

Additionally, the steering limit position detection process is performed every predetermined time (for example, 1 msec) by the timer interruption process as shown in Fig. 25. Above all, the motor current values Iu, Iv, and Iw inputted from the motor current detector 60 in step S121, and the process is advanced to step S122. The q-axis current Iq is calculated by performing the three-to-two phase conversion process to the read motor current values Iu, Iv, and Iw in S22, and the process is advanced to step S123.

In step S123, the current change rate ΔIq is calculated by differentiating the calculated-q axis current Iq, and the process is advanced to step S124. It is judged whether the calculated current change rate ΔIq is not less than the threshold value ΔIth in step S124. Here, when the calculated current change rate ΔIq is not less than the threshold value ΔIth, it is judged as the steering limit position, the process is advanced to step S125, the steering limit position detection flag F is set to "1", and a predetermined main program is performed after ending the timer interruption process. When the calculated current change rate ΔIq is less than the threshold value ΔIth, it is not judged as the steering limit position, the process is advanced to step S126, the steering limit position detection flag F is reset to "0", and a predetermined main program is performed after ending the timer interruption process.

In the processes shown in Figs. 14 and 25, the process in step S2 shown in Fig. 14 corresponds to the processes of the current command value calculation part, the processes in steps S3 to S14 shown in Fig. 14 correspond to the processes of the inverter 66 of the motor control part, the processes in steps S121 to S123 shown in Fig. 25 correspond to the processes of the current change rate detection part, and the processes in steps S124 to S126 and steps S0 and S16 shown in Fig. 14 correspond to the processes of the duty ratio limiting part.

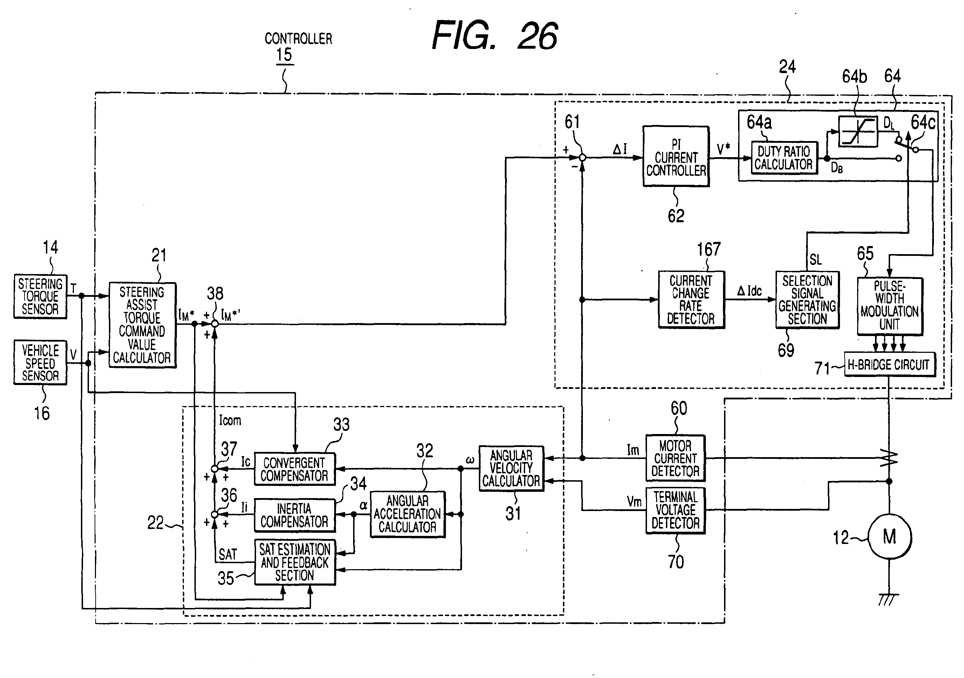

In addition, in the embodiment, although it is described about the case that the invention is applied to a brushless motor, the invention is not limited to the case. In the case that the invention is applied to a brush motor as shown in Fig. 26, it may be configured such that the motor angular velocity ω is calculated by performing the following equation (5) to the detected motor current value Im outputted from the motor current detector 60 and a motor terminal voltage Vm outputted from a terminal voltage detector 70 by the angular velocity calculator 31, the torque command value IM*' is directly supplied to the motor control part 24 by removing the d-q axis command value calculator 23, the motor control part 24 is configured by one subtractor 61, one PI current controller 62, and one duty ratio calculator/limit calculator 64, the current change rate ΔIdc is obtained by the current change rate detection part 167 differentiating the motor current Im, the selection signal SL of the logical value "0" or "1" is outputted in accordance with whether the current change rate ΔIdc is less than the threshold value ΔIth by the selection signal generating section 69, and the inverter 66 is changed to a H-bridge circuit 71.

$$\omega = (Vm - Im \cdot Rm)/K0 \,\dots\dots\, (5)$$

Here, Rm represents the winding resistance of the motor and K0 represents a constant of the electromotive force of the motor.

In the embodiment, although it is described about the case that the duty ratio DuB is calculated by the duty ratio calculator 64a, the limit duty ratio DuL is generated by the limiter 64b, and one of them is selected by the duty ratio calculator/limit calculators 64u, 64v, and 64w in the selection switch portions 64c, the invention is not limited to the case, but may be configured such that voltage command values Vu, Vv, Vw, and V* are limited to have predetermined values by the limiter, the voltage command values Vu, Vv, Vw, and V* and the limit voltage command values VuL, VvL, VwL, and V* are selected by the selection switch portion, and the selected command values are calculated into the duty ratios Du, Dv, Dw, and D by the duty ratio calculator.

Hereinafter, a third embodiment in accordance with the invention will be described with reference to the drawings. A basic configuration of the third embodiment in accordance with the invention is the same as those of the first and second embodiments. A member related to the first and second embodiments and the same member as the first and second embodiments will be marked with the same reference numerals and signs and a specific description thereof will be omitted.

The command value compensator 22 at least includes the angular velocity calculator 31, the angular acceleration calculator 32, the convergent compensator 33, the inertia compensator 34, the self-aligning torque detection part (hereinafter, referred to a SAT detector) 235 for detecting the self-aligning torque (SAT). Here, the angular velocity calculator 31, the angular acceleration calculator 32, the convergent compensator 33, and the inertia compensator 34 are the same configuration components as those of the first and second embodiments.

The SAT detector 235 calculates the self-aligning torque SAT from the steering torque T, angular velocity ω, the angular acceleration α, and the steering assist command value IM* acquired from the steering assist torque command value calculator 21.

An inertia compensation value Ii acquired from the inertia compensator 34 is added to the self-aligning torque SAT acquired from the SAT detector 235 using the adder 36. The command compensation value Icom is acquired by adding the added result of the adder 36 to the calculated convergent compensation value Ic acquired from the convergent compensator 33 using the adder 37. The compensated torque command value IM*' is acquired by adding the command compensation value Icom to the steering assist torque command value IM* outputted from the steering assist torque command value calculator 21 using the adder 38. The compensated torque command value IM*' is outputted to the d-q axis current command value calculation part 23.

The motor current controller 24 includes the pulse-width modulating section 65, the inverter 66, a differential circuit 268 as the self-aligning torque change rate detection part for calculating the self-aligning torque change rate ΔSAT based on the self-aligning torque SAT, the, and the selection signal generating section 69 for outputting the selection signal SL of the logical value "0" in the state that the self-aligning torque change rate ΔSAT calculated by the differential circuit 268 is less than the threshold value ΔTth for judging the steering limit and the selection signal SL of the logical value "1" in the state that the self-aligning torque change rate ΔSAT is not less than the threshold value ΔTth. Here, the pulse-width modulating section 65 and the inverter 66 are the same configuration components as those of the first and second embodiments.

Additionally, the selection signal generating section 69 judges whether the self-aligning torque change rate ΔSAT calculated by the differential circuit 268 is not less than the threshold value ΔTth (for example, 3000 Nm/sec) for judging the self-aligning torque of a large slope that does not occur at the time of a normal steering but may occur at the time of reaching the steering limit position such that the rack shaft 8c of the steering gear 8 reaches the rack stroke end or a tire can not perform its steering road wheel due to contacting with a curbstone or the like. The selection signal generating section 69 outputs the selection signal SL of the logical value "0" in the state that the self-aligning torque change rate ΔSAT is less than the threshold value ΔTth since it is judged that the rack shaft 8c does not reach the steering limit position, and outputs the selection signal SL of the logical value "1" in the state that the self-aligning torque change rate ΔSAT is not less than the threshold value ΔTth since it is judged that the rack shaft 8c reaches the steering limit position.

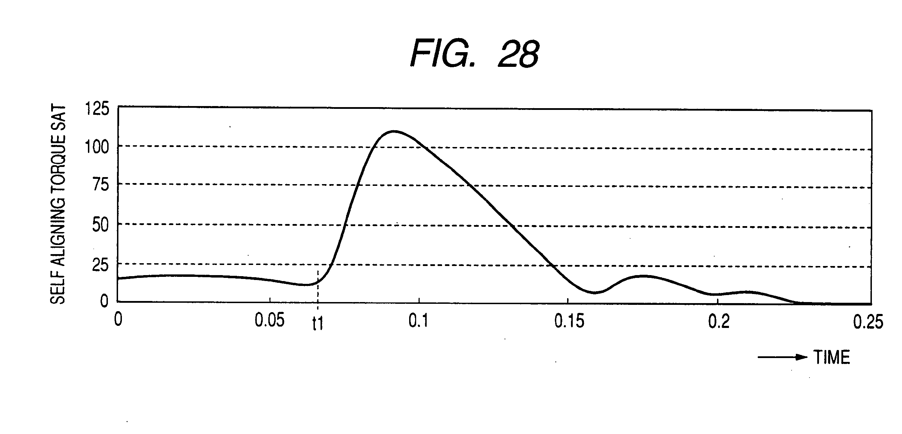

Here, as shown in Fig. 28 in which a self-aligning torque wave form is outputted from the SAT detector 235 in the state where the rack shaft 8c reaches the steering limit position, assuming that the rack shaft 8c reaches the steering limit position at the time point t1, the movement of the rack shaft 8c is stopped in the direction of the vehicle width. Due to this, the rotation of the electric motor 12 is stopped in terms of the pinion shaft 7, the universal joint 6, the middle shaft 5, the universal joint 4, the output shaft 2b of the steering shaft 2, and the deceleration gear 11. For this reason, the self-aligning torque SAT increases with a large slope (3500 Nm/sec or so in case of an example shown in Fig. 28) that does not occur at the time of a normal steering. After this, the motor current values Iu, Iv, and Iw gradually decrease by an operation of an over-current preventing circuit, whereby the self-aligning torque SAT gradually decreases. With such a configuration, it is possible to securely detect the steering limit position by setting the threshold value ΔTth of the self-aligning torque change rate ΔSAT to a predetermined value (for example, 3000 Nm/sec or so).

Next, an operation of the third embodiment will be described.
In order to start driving the vehicle, a power is inputted to the controller 15 by turning on an ignition switch IG, whereby a steering assist control process is performed.
Accordingly, the steering torque T detected by the steering torque sensor 14, the vehicle speed V detected by the vehicle speed sensor 16, the detected motor current values Iu, Iv, and Iw detected by the motor current detectors 60u, 60v, and 60w, and the motor rotational angle θ detected by the rotational angle sensor 17 are supplied to the controller 15.

Thus, the steering assist torque command value calculator 21 calculates the steering assist torque command value IM* on the basis of the steering torque T and the vehicle speed V with reference to the steering assist command value calculation map shown in Fig. 4.

On the other hand, the motor rotational angle θ detected by the rotational angle sensor 17 is inputted to the angular velocity calculator 31, whereby the motor angular velocity ω is calculated. The motor angular velocity ω is inputted to the angular acceleration calculator 32, whereby the motor angular acceleration α is calculated.

Additionally, the convergent compensator 33 calculates the convergent compensation value Ic on the basis of the motor angular velocity ω, and the inertia compensator 34 calculates the inertia compensation value Ii on the basis of the motor angular acceleration. Also, the SAT detector 235 calculates the self-aligning torque SAT on the basis of the motor angular velocity ω and motor angular acceleration α, the adders 36 and 37 calculates the command value compensation value Icom by adding the convergent compensation value Ic, the inertia compensation value Ii, and the self-aligning torque SAT on another, and the adder 38 calculates the compensated steering assist torque command value compensation value IM*' by adding the command value compensation value Icom to the steering assist torque command value IM*.

The calculated compensated steering assist torque command value compensation value IM*' is supplied to the d-q axis current command value calculation part 23.

At this time, the steering torque T detected by the steering torque sensor 14 is "0" and the vehicle speed V detected by the vehicle speed sensor 16 is also "0" in the state where the vehicle is stopped and the steering wheel 1 is not steered, whereby the steering assist torque command value IM* calculated by the steering assist torque command value calculator 21 is "0".

Additionally, the rotational angular velocity ω acquired from the angular velocity calculator 31 is "0" and then the rotational angular acceleration α acquired from the angular acceleration calculator 32 is "0". For this reason, the self-aligning torque SAT acquired from the SAT detector 235 is "0" and then the self-aligning torque change rate ΔSAT acquired from the differential circuit 268 is "0", which is supplied to the selection signal generating section 69. Since the self-aligning torque change rate ΔSAT is less than the threshold value ΔTth, the selection signal SL of the logical value "0" is supplied to the duty ratio calculator/limit calculators 64u, 64v, and 64w.

As a result, the duty ratio calculator/limit calculators 64u, 64v, and 64w select the duty ratios DuB, DvB, and DwB outputted from the duty ratio calculators 64a, and the pulse-width modulating signal driving the gates of the switching elements of an upper arm and a lower arm constituting the inverter 66 are supplied to the inverter 66 from the pulse-width modulating section 65 by inputting the duty ratios DuB, DvB, and DwB to the pulse-width modulating section 65.

At this time, as described above, the compensated steering assist torque command value IM*' is "0", and the compensated torque command value IM*' is supplied to the d-q axis current command value calculation part 23. Accordingly, d-axis target current Id* and-q axis target current Iq* are calculated by the d-q axis current command value calculation part 23 performing a command value calculation in d-q axis coordinate system on the basis of the motor rotational angle θ and the motor angular velocity ω, and the d-axis target current Id* and the q-axis target current Iq* are converted into the three-phase current command values Iu*, Iv*, and Iw* of "0" by the two-to-three phase converter 54 and the resultant values are outputted to the motor current controller 24.

In the motor current controller 24, since the motor current values Iu, Iv, and Iw detected by the motor current detector 60 are "0", the current deviations ΔIu, ΔIv, and ΔIw outputted from the subtractors 61u, 61v, and 61w are "0, and the voltage command values Vu, Vv, and Vw outputted from the PI current controller 62 are "0", the duty ratios DuB, DvB, and DwB outputted from the duty ratio calculator/limit calculator 64 become 0%. Additionally, since the pulse-width modulating signal is supplied to the inverter 66 from the pulse-width modulating section 65, the motor current values Iu, Iv, and Iw outputted from the inverter 66 is "0", and thus the stop state of the electric motor 12 is continued.

When a steer without driving, that is, steering the steering wheel 1 to the right side (or the left side) is performed in the state that the electric motor 12 is stopped, the steering torque T in accordance with a steering direction is detected by the steering torque sensor 14, and the steering torque T is supplied to the controller 15. Accordingly, the steering assist torque command value IM* of the inside characteristic curve which promptly obtains a large value in accordance with the increase of the steering torque T is selected by the steering assist torque command value calculator 21 because the vehicle speed V is "0", and then the steering assist torque command value IM* is outputted to the adder 38. Additionally, the rotational angular velocity ω and the rotational angular acceleration α are outputted from the steering.

With such a configuration, the command compensation value Icom calculated by the command value compensator 22 is added thereto by the adder 38 so as to calculate the compensated steering assist torque command value IM*, and the compensated steering assist torque command value IM*' is supplied to the d-q axis current command value calculation part 23.

The d-axis target current Id* and the q-axis target current Iq* in accordance with the compensated torque command value IM*' are calculated by the d-q axis current command value calculation part 23, and the resultant values are converted into the three-phase current command values Iu*, Iv*, and Iw* by the three-to-two phase converter 54 so as to be outputted to the motor current controller 24.

Thus, in the motor current controller 24, since the motor current values Iu, Iv, and Iw detected by the motor current detector 60 are "0", the current command values Iu*, Iv*, and Iw* as the current deviations ΔIu, ΔIv, and ΔIw outputted from the subtractors 61u, 61v, and 61w are supplied to PI current controller 62, and then the voltage command values Vu, Vv, and Vw are calculated by the PI control process of the PI current controller 62 and outputted to the duty ratio calculator/limit calculators 64u, 64v, and 64w.

In this state, since the self-aligning torque change rate ΔSAT acquired from the differential circuit 268 is less than the self-aligning torque change rate at the time of reaching the steering limit position, the selection signal SL of the logical value "0" is continuously outputted from the selection signal generating section 69, the duty ratios DuB, DvB, and DwB in accordance with the voltage command values Vu, Vv, and Vw outputted from the duty ratio calculators 64a are selected by the selection switch portions 64c in the duty ratio calculator/limit calculators 64u, 64v, and 64w, the pulse-width modulating signal in accordance with the duty ratios DuB, DvB, and DwB are supplied to the inverter 66 from the pulse-width modulating section 65.

With such a configuration, the motor current values Iu, Iv, and Iw are outputted from the inverter 66 so as to rotationally drive the electric motor 12, and the steering assist torque in accordance with the steering torque T is generated so as to be transmitted to the output shaft 2b of the steering shaft 2 in terms of the deceleration gear 11, thereby enabling the steering to be easily performed in the state of the steer without driving.

At this time, since the self-aligning torque SAT rapidly increases due to the steering, the self-aligning torque change rate ΔSAT at this time is less than the self-aligning torque change rate at the time of reaching the steering limit position and less than the threshold value ΔTth as described above. Therefore, the selection signal SL of the logical value "0" is continuously outputted from the selection signal generating section 69, so the duty ratios DuB, DvB, and DwB in accordance with the voltage command values Vu, Vv, and Vw outputted from the duty ratio calculators 64a are continuously selected by the selection switch portions 64c of the duty ratio calculator/limit calculator 64.

After that, when the vehicle is started, the vehicle speed V detected by the vehicle speed sensor 16 increases. So, when the steering wheel 1 is steered at the time of driving, the steering assist torque command value calculated by the steering assist torque command value calculator 21 selects the outside characteristic curve as the vehicle speed V becomes faster in such the map shown in Fig. 4, whereby an increment of the steering assist torque command value IM* set to correspond to an increase of the steering torque T decreases and the steering assist torque generated by the electric motor 12 has a small value relative to the state of the steer without driving, thereby enabling to generate the optimal steering assist torque in accordance with the vehicle speed V.

Incidentally, when the steering wheel 1 is promptly steered to right or left up to the steering limit position in the state of the steer without driving or driving at low speed to enter a garage or the like, the motor current values Iu, Iv, and Iw in accordance with the steering torque T detected by the steering torque sensor 14 are generated by the controller 15 so as to be supplied to the electric motor 12 as described above before reaching the steering limit position, thereby enabling to easily perform the steering.

At this time, it becomes a state that the steering torque T is large, and the duty ratio of the pulse-width modulating signal outputted from the pulse-width modulating section 65 is substantially close to 100% since it is the steering at the time of the steer without driving or driving at extremely low speed.

With such the state, when the buffer member 8e of the rack shaft 8c reaches the rack stroke end which is brought into contact with the stopper member 8f or that reaches the steering limit position in such a reason that the tire is brought into contact with the curbstone or the like, the movement of the rack shaft 8c is stopped, whereby revolutions of the pinion 8b, pinion shaft 7, the universal joint 6, the middle shaft 5, the universal joint 4, and the output shaft 2b of the steering shaft 2 are stopped, whereby the rotation of the electric motor 12 is stopped by the deceleration gear 11.

At this time, the steering assist command value IM* rapidly increases because the steering torque rapidly increases, and a torque due to the inertia moment of the electric motor is added because a rotation of the output shaft 2b of the steering shaft 2 is stopped. For this reason, a rapidly increasing self-aligning torque SAT is supplied to the differential circuit 268 from the SAT detector. At this time, the self-aligning torque SAT outputted from the SAT detector 235 increases with a large slope as shown in Fig. 28, and the self-aligning torque change rate ΔSAT outputted from the differential circuit 268 becomes to be not less than the threshold value ΔTth.

Since the self-aligning torque which is not less than the threshold value ΔTth is supplied to the selection signal generating section 69, the selection signal SL of the logical value "1" is outputted to the selection switch portions 64c of the duty ratio calculator/limit calculator 64 from the selection signal generating section 69. With such a configuration, the limit duty ratios DuL, DvL, and DwL of a low duty ratio outputted from the limiters 64b are selected by the selection switch portions 64c and supplied to the pulse-width modulating section 65, and the pulse-width modulating signal in accordance with the limit duty ratios DuL, DvL, and DwL are supplied to the inverter 66 by the pulse-width modulating section 65.

Thus, since the motor current values Iu, Iv, and Iw outputted from the inverter 66 decrease, the steering assist torque generated by the electric motor 12 decreases and a peak value of the torque can be suppressed as shown in Fig. 7 in which peak values of the torque transmitted to the middle shaft 5 are represented by characteristic curves L1 and L2, and the characteristic curve L1 marked with a solid line at the time of performing the duty ratio limit control is compared with a characteristic curve L2 marked with a dashed line at the time of not performing the duty ratio limit control, thereby enabling to enhance the durability of the torque transmitting member of the middle shaft and the like.

Moreover, the self-aligning torque change rate ΔSAT is calculated on the basis of the self-aligning torque SAT calculated by the SAT detector 235, and the steering limit position of such as an end contact state and a state that the tire brought into contact with a curbstone is detected by comparing the self-aligning torque change rate ΔSAT with the threshold value ΔTth, thereby enabling to detect the steering limit position and state at the time of reaching the steering limit position in a short time (for example, 10 msec or so).

Since the steering assist torque generated by the electric motor 12 can be limited in a short time (for example, 20 msec or so) after the steering limit position is detected, the steering assist torque can be limited within a time (for example, 30 msec or so) that the peak value of the transmitting torque occurs in the middle shaft 5 after reaching the steering limit position in the case that the rack shaft 8c is not provided with the buffer member 8e, so the torque occurred in the middle shaft decreases, thereby enabling to enhance the durability of the middle shaft 5. Moreover, the advantage can be exhibited without additionally providing with a sensor such as a steering angle sensor.

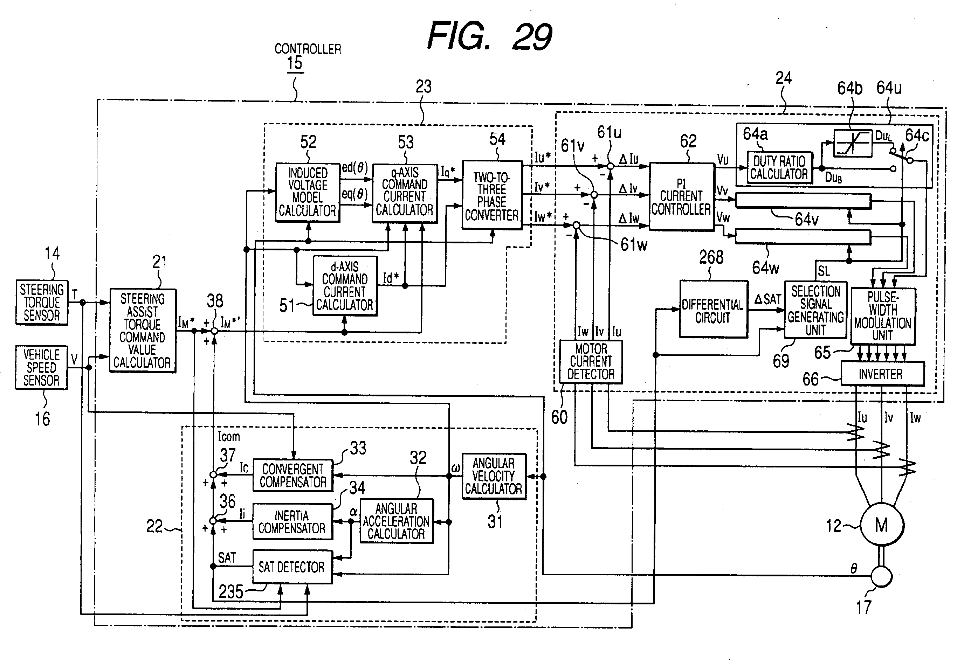

Additionally, in the embodiment, although it is described about the case that the limit duty ratios DuL, DvL, and DwL of the low duty ratio outputted from the limiters 64b are selected instead of the duty ratios DuB, DvB, and DwB, in accordance with the steering torque, outputted from the duty ratio calculators 64a of the duty ratio calculator/limit calculator 64 in such a state that the self-aligning torque change rate ΔSAT is not less than the threshold value ΔTth, which is judged as the steering limit position, the invention is not limited to the case. As shown in Fig. 29, the self-aligning torque SAT detected by the SAT detector 235 is additionally inputted to the selection signal generating section 69, and such a state that the self-aligning torque change rate ΔSAT is not less than the threshold value ΔTth and the self-aligning torque change rate ΔSAT is also not less than a predetermined value (for example, 40 Nm) is set to the steering limit position detection condition or such a state that the self-aligning torque change rate ΔSAT is not less than the threshold value ΔTth and the self-aligning torque SAT is also maintained in the state of the predetermined value (for example, 40 Nm) or so for a predetermined time (for example, 10 msec) is set to the steering limit position detection condition, thereby enabling to more accurately detect such the state of reaching the steering limit position. In this case, when the vehicle is stopped on such a Belgian road at the time of the normal steering, sometimes a large vibration load may be inputted from the tire, and when the vibration load is large, the slope of the motor current of the electric motor 12 may be inclined to become large, but large current does not continuously flow due to the vibration load from the tire, thereby enabling to securely prevent the misdetection of the driving state.

Additionally, since the steering limit position is detected at the time when the steering wheel 1 is steered toward the rack stroke end, the steering limit position detection condition may be set to a state a sign of the self-aligning torque SAT coincides with a sign of the self-aligning torque change rate ΔSAT and the self-aligning torque change rate ΔSAT is not less than the threshold value ΔTth. In this case it is possible to securely prevent a misdetection at the time when the steering wheel 1 is steered in a direction departing from the rack stroke end and the self-aligning torque change rate ΔSAT is not less than the threshold value ΔTth.

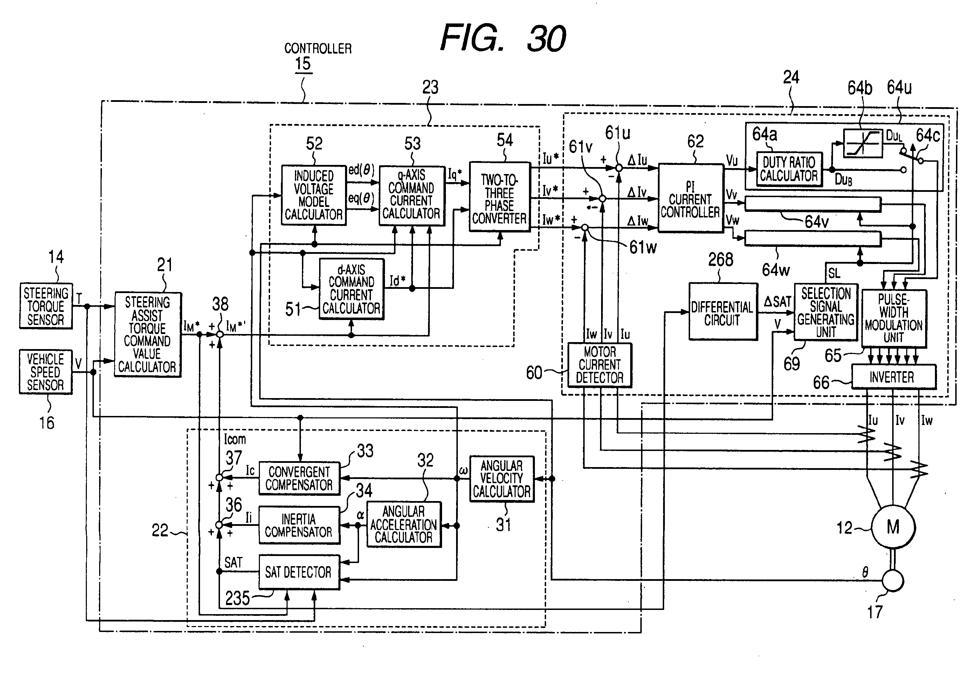

In addition, in the embodiment, although it is described about the case that the threshold value ΔTth having a fixed value is compared with the self-aligning torque change rate ΔSAT by the selection signal generating section 69, the invention is not limited to the case. However, as shown in Fig. 30, the invention may be configured such that the vehicle speed V detected by the vehicle speed sensor 16 is inputted to the selection signal generating section 69, the threshold value setting process shown in Fig. 10 is performed by the selection signal generating section 69, and the threshold value ΔTth for judging the steering limit is changed with the vehicle speed V.

Namely, the threshold value setting process shown in Fig. 10 is performed every predetermined time (for example, 1 msec) by the timer interruption process. Above all, the vehicle speed V detected by the vehicle speed sensor 16 is read in step S31, and the process is advanced to step S32. The threshold value ΔTth is calculated on the basis of the read vehicle speed V with reference to the threshold value calculation table shown in Fig. 11, and the process is advanced to step S33. The calculated threshold value ΔTth is memorized in a predetermined memory region such as RAM which can be referred in the below-mentioned steering limit position detection process, the timer interruption process is ended, and a predetermined main program is performed.

Here, the threshold value calculation table shown in Fig. 11 is set to the predetermined value ΔTth1 when the vehicle speed V is "0", and the threshold value ΔTth is set to increase as the vehicle speed V increases.

The threshold value setting unit corresponds to the process shown in Fig. 10.

As described above, the threshold value ΔTth for judging the steering limit is set to increase as the vehicle speed V increases, so the steering is not performed up to the end contact state as the vehicle speed becomes fast, thereby enabling to securely prevent the misdetection of the end contact state. Although it is described about the case that the threshold value calculation table shown in Fig. 11 is used in the threshold value setting process shown in Fig. 10, the invention is not limited to the case, but the invention may be configured such that the threshold value ΔTth is calculated by expressing the characteristic line shown in Fig. 11 as a linear equation and inputting the vehicle speed V to the equation. Additionally, a method of setting the threshold value is not limited to a method of using software, but the threshold value ΔTth in accordance with the vehicle speed V may be set by using hardware such as a function generator.

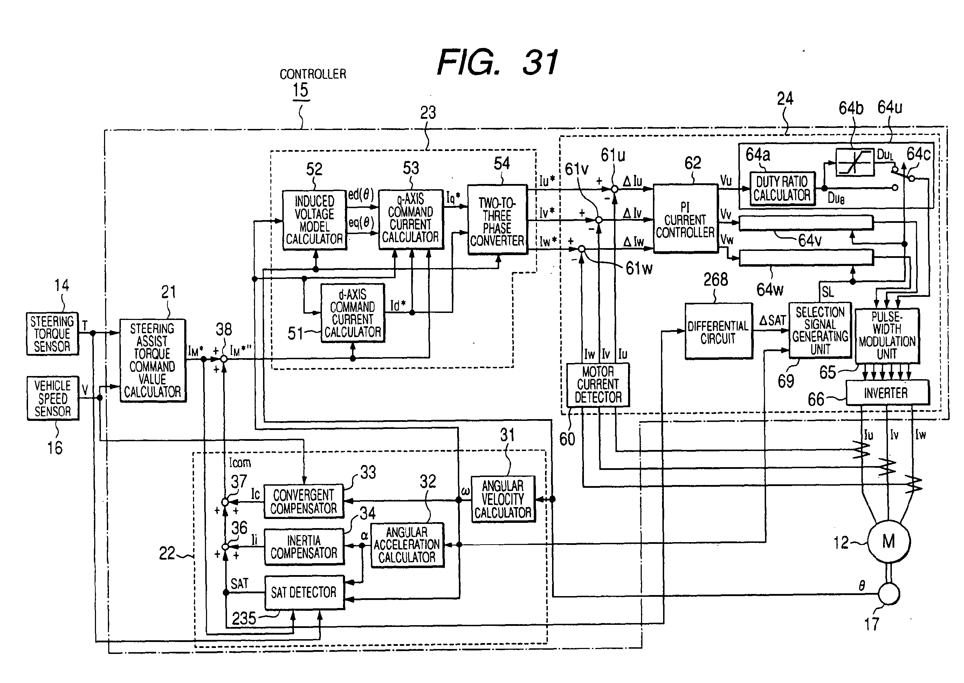

s shown in Fig. 31, the steering limit position detection condition may be set to a state that the motor angular velocity ω is not less than the predetermined value and the self-aligning torque change rate ΔSAT is not less than the threshold value ΔTth by supplying the motor angular velocity ω calculated by the angular velocity calculator 31 instead of the self-aligning torque SAT to the selection signal generating section 69.

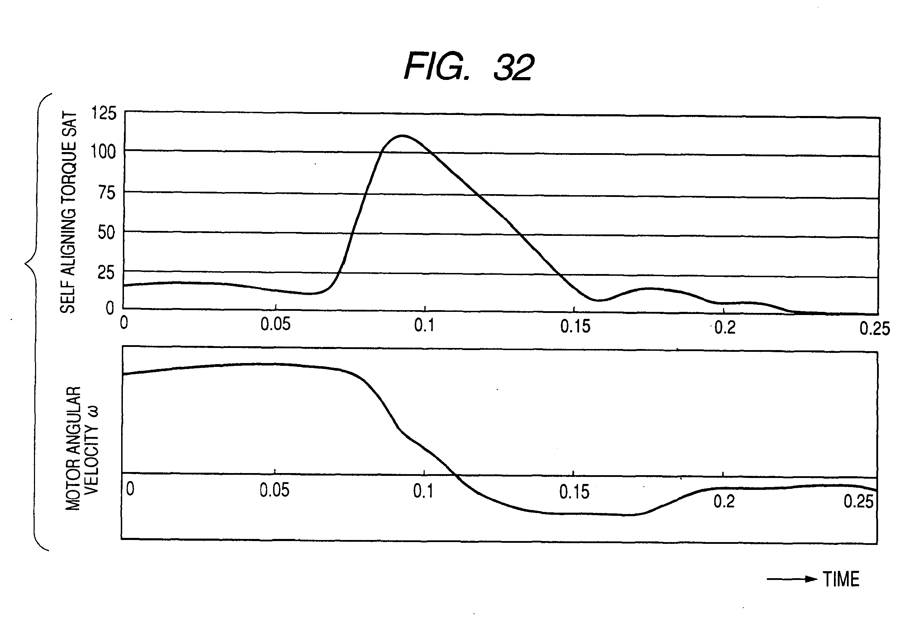

In this case, the motor angular velocity (the motor angular velocity before a predetermined time (for example, 20 msec or so)) just before reaching the steering limit position is used since the motor angular velocity ω at the time of reaching the steering limit position rapidly decreases as shown in Fig. 32.

As described above, by inputting the motor angular velocity ω to the steering limit position detection condition, it is not necessary to limit the steering assist torque using the fixed duty ratio of a small value since the impact force at the time of reaching the steering limit position is small and the peak value of the transmitting torque transmitted to the middle shaft 5 is small in the state that the motor angular velocity ω is less than the predetermined value, but the peak value of the transmitting torque transmitted to the middle shaft 5 can be securely decreased by limiting the steering assist torque since the impact force at the time of reaching the steering limit position becomes large and the peak value of the transmitting torque transmitted to the middle shaft 5 becomes large in the state that the motor angular velocity ω is not less than the predetermined value.

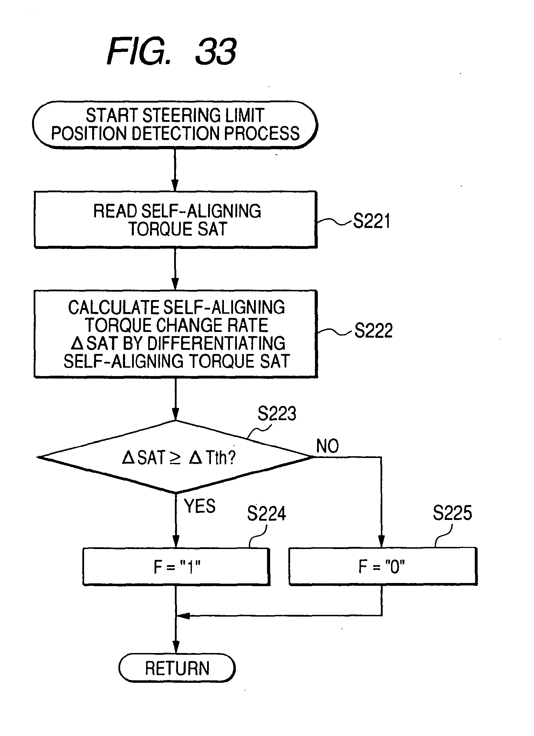

Additionally, the steering limit position detection process is performed by the timer interruption process every predetermined time (for example, 1 msec) as shown in Fig. 33. Above all, the self-aligning torque SAT calculated in step S7 of the steering assist control process shown in Fig. 14 is read in step S221, and the process is advanced to step S222. The steering assist control process performs the same process as those of the first and second embodiments. The self-aligning torque change rate ΔSAT is calculated by differentiating the read self-aligning torque SAT in step S222, and the process is advanced to step S223. It is judged whether the calculated self-aligning torque change rate ΔSAT is not less than the threshold value ΔTth in step S223. When the calculated self-aligning torque change rate ΔSAT is not less than the threshold value ΔTth, it is judged as the steering limit position, the process is advanced to step S224. The steering limit position detection flag F is set to "1", and a predetermined main program is performed after the timer interruption process is ended. When the calculated self-aligning torque change rate ΔSAT is less than the threshold value ΔTth, it is not judged as the steering limit position, and the process is advanced to step S225. The steering limit position detection flag F is reset to "0", and a predetermined main program is performed after the timer interruption process is ended.

In the processes shown in Figs. 14 and 33, the process in step S2 shown in Fig. 14 corresponds to the processes of the current command value calculation part, the processes in steps S3 to S14 shown in Fig. 14 correspond to the processes of the inverter 66 of the motor control part, the process in step S7 of the steps S3 to S14 corresponds to the processes of the self-aligning torque detection part, the processes in steps S221 to S222 shown in Fig. 33 correspond to the processes of the self-aligning torque change rate detection part, and the processes in steps S223 to S225 and steps S0 and S16 shown in Fig. 14 correspond to the processes of the duty ratio limiting part.

In addition, in the embodiment, although it is described about the case that the self-aligning torque SAT is detected on the basis of the motor angular velocity ω, the rotational angular acceleration α, the steering torque T and the steering assist torque command value IM*, the invention is not limited to the case, but may be configured such that the q-axis current Iq is calculated by performing the three-to-two phase conversion to the motor current values Iu, Iv, and Iw detected by the motor current detector 60 instead of the steering assist torque command value IM*, the assistant motor torque Tma is calculated by performing the following equation (6) on the basis of the q-axis current Iq and the rotational angular acceleration, and the calculated assistant motor torque is applied thereto.

$$\mathrm{Tma} = \mathrm{Kt} \cdot \mathrm{Iq} - \mathrm{Jm} \cdot \alpha \;\; \text{......} \;\; (6)$$

Here, Kt is a torque constant of the motor, and Jm is an inertia moment of a rotor portion of the motor.

Moreover, the invention may be configured such that the motor torque Tma is directly detected by disposing a torque sensor such as a magnetostrictive torque sensor on the torque transmitting shaft such as the output shaft of the electric motor 12 and the input and output shafts of the deceleration gear 11.

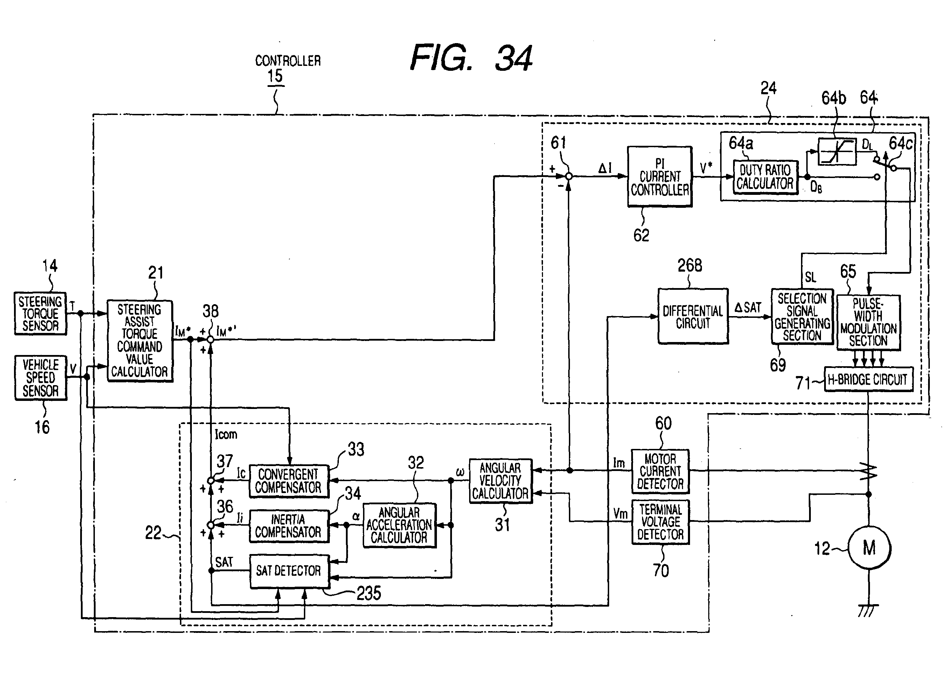

In addition, in the embodiment, although it is described about the case that the invention is applied to a brushless motor, the invention is not limited to the case. In the case that the invention is applied to a brush motor as shown in Fig. 34, the invention may be configured such that the motor angular velocity ω is calculated by performing the following equation (7) to the detected motor current value Im outputted from the motor current detector 60 and a motor terminal voltage Vm outputted from a terminal voltage detector 70 by the angular velocity calculator 31, the torque command value IM*' is directly supplied to the motor control part 24 by removing the d-q axis command value calculator 23, the motor control part 24 is configured by one subtractor 61, one PI current controller 62, and one duty ratio calculator/limit calculator 64, the self-aligning torque change rate ΔSAT is calculated by the differential circuit 268 as the self-aligning torque change rate detection part differentiating the self-aligning torque detected by the SAT detector 235, the selection signal SL of the logical value "0" or "1" is outputted in accordance with whether the self-aligning torque change rate ΔSAT is less than the threshold value ΔTth by the selection signal generating section 69, and the inverter 66 is changed to a H-bridge circuit 71.

$$\omega = (Vm - Im \cdot Rm) / K0 \quad ...... \quad (7)$$

Here, Rm represents the winding resistance of the motor and K0 represents a constant of the electromotive force of the motor.

In the embodiment, although it is described about the case that the duty ratio DuB is calculated by the duty ratio calculator 64a, the limit duty ratio DuL is generated by the limiter 64b, and one of them is selected by the duty ratio calculator/limit calculators 64u, 64v, and 64w in the selection switch portions 64c, the invention is not limited to the case, but may be configured such that voltage command values Vu, Vv, Vw, and V* are limited to have predetermined values by the limiter so as to calculate limit voltage command values VuL, VvL, VwL, and V*L, the voltage command values Vu, Vv, Vw, and V* and the limit voltage command values VuL, VvL, VwL, and V* are selected by the selection switch portion, and the selected command values are calculated into the duty ratios Du, Dv, Dw, and D by the duty ratio calculator.

While the invention has been described in connection with the exemplary embodiments, it will be obvious to those skilled in the art that various changes and modification may be made therein without departing from the present invention, and it is aimed, therefore, to cover in the appended claim all such changes and modifications as fall within the true spirit and scope of the present invention.

**Claims**

1.    An electric power steering apparatus comprising:

a steering torque detection part which detects steering torque inputted to a steering mechanism;
a current command value calculation part which calculates a current command value on the basis of at least the steering torque detected by the steering torque detection part;
an electric motor which generates a steering assist torque applied on a steering shaft of the steering mechanism; and
a motor control part which controls the electric motor by a pulse-width modulating signal on the basis of the current command value,

wherein the motor control part comprises:

a motor torque detection part which detects a motor torque generated between the electric motor and the steering shaft;
a motor torque change rate detection part which calculates a change rate of the motor torque detected by the motor torque detection part; and
a duty ratio limiting part which judges that a duty ratio limiting condition is satisfied when the change rate of the motor torque calculated by the motor torque change rate detection part is not less than a threshold value for judging a steering limit, and

wherein the duty ratio limiting part fixes a duty ratio of the pulse-width modulating signal to a predetermined value for limiting a torque transmitted to a torque transmitting member between the steering shaft of the steering mechanism and a steering road wheel when the duty ratio limiting condition is satisfied.

2.    The electric power steering apparatus according to Claim 1, wherein the motor torque detection part comprises:

a driving current detection part which detects driving current of the electric motor;
a rotational angular acceleration detection part which detects a rotational angular acceleration of the electric motor; and

a motor torque calculation part which calculates the torque generated between the electric motor and the steering shaft on the basis of the driving current of the electric motor detected by the driving current detection part and the rotational angular acceleration detected by the rotational angular acceleration detection part.

3. The electric power steering apparatus according to Claim 1, wherein the motor torque detection part comprises a magnetostrictive torque sensor which is disposed on a torque transmitting shaft provided between an output shaft of the electric motor and the steering shaft.

4. The electric power steering apparatus according to Claim 1, wherein the duty ratio limiting part judges that the duty ratio limiting condition is satisfied when:

the change rate of the motor torque is not less than the threshold value; and
an absolute value of the motor torque detected by the motor torque detection part is not less than a predetermined value,
then, the duty ratio limiting part fixes the duty ratio to the predetermined value.

5. The electric power steering apparatus according to Claim 1, wherein the duty ratio limiting part judges that the duty ratio limiting condition is satisfied when:

the change rate of the motor torque is not less than the threshold value; and
a state where the absolute value of the motor torque detected by the motor torque detection part is not less than a predetermined value is continuously maintained for a predetermined time,
then the duty ratio limiting part fixes the duty ratio to the predetermined value.

6. The electric power steering apparatus according to Claim 1, wherein the duty ratio limiting part fixes the duty ratio to the predetermined value when
the duty ratio limiting part judges that the duty ratio limiting condition is satisfied; and
a sign of the change rate of the motor torque coincides with a sign of the calculated motor torque value.

7. The electric power steering apparatus according to Claim 1, further comprising:

a motor angular velocity detecting unit which detects a motor angular velocity of the electric motor,

wherein the duty ratio limiting part fixes the duty ratio to the predetermined value when:

it is judged that the duty ratio limiting condition is satisfied; and
the motor angular velocity detected by the motor angular velocity detecting unit is not less than a predetermined value.

8. The electric power steering apparatus according to Claim 1, further comprising:

a motor angular velocity detecting unit which detects a motor angular velocity of the electric motor,

wherein the duty ratio limiting part fixes the duty ratio to the predetermined value when:

it is judged that the duty ratio limiting condition is satisfied; and
the motor angular velocity detected before a predetermined time by the motor angular velocity detecting unit is not less than a predetermined value.

9. The electric power steering apparatus according to Claim 1, wherein the duty ratio limiting part releases the duty ratio fixed to the predetermined value when a predetermined time passes after the duty ratio is fixed to the predetermined value.

10. The electric power steering apparatus according to Claim 9, wherein the predetermined time for releasing the duty ratio fixed to the predetermined value is set based on the motor angular velocity.

11. The electric power steering apparatus according to Claim 1, further comprising:

a vehicle speed detecting unit which detects a vehicle speed,

wherein the duty ratio limiting part comprises a threshold value setting unit which increases the threshold value for judging the steering limit in accordance with an increase of the vehicle speed detected by the vehicle speed detecting unit.

12. The electric power steering apparatus according to Claim 1,
wherein the motor control part comprises an inverter which is driven by the pulse-width modulating signal so as to supply motor current to the electric motor, and
wherein the duty ratio limiting part controls one of an upper arm and a lower arm of an inverter to be an ON state at the same time when the duty ratio limiting condition is satisfied, so as to control into an electromagnetic brake mode.

13. The electric power steering apparatus according to Claim 1, wherein the torque transmitting member of the steering mechanism comprises a middle shaft which is connected to a joint having a yoke manufactured by a press molding method.

14. The electric power steering apparatus according to Claim 1, wherein the steering mechanism includes a buffer member on a rack stroke end of a steering gear.

15. An electric power steering apparatus comprising:

a steering torque detection part which detects a steering torque inputted to a steering mechanism;
a current command value calculation part which calculates a current command value on the basis of at least the steering torque detected by the steering torque detection part;
an electric motor which generates a steering assist torque applied on a steering shaft of the steering mechanism; and
a motor control part which controls the electric motor by a pulse-width modulating signal on the basis of the current command value,

wherein the motor control part comprises:

a driving current detection part which detects a driving current of the electric motor;
a current change rate detection part which calculates a change rate of the driving current of the electric motor detected by the driving current section, and
a duty ratio limiting part which judges that a duty ratio limiting condition is satisfied when the change rate of the driving current of the electric motor calculated by the current change rate detection part is not less than a threshold value for judging a steering limit, and

wherein the duty ratio limiting part fixes a duty ratio of the pulse-width modulating signal to a predetermined value for limiting a torque transmitted to a torque transmitting member between the steering shaft of the steering mechanism and a steering road wheel when the duty ratio limiting condition is satisfied.

16. The electric power steering apparatus according to Claim 15, wherein the duty ratio limiting part judges that the duty ratio limiting condition is satisfied when:

the change rate of the driving current of the electric motor is not less than the threshold value; and
an absolute value of a detected driving current value of the electric motor is not less than a predetermined value,
then the duty ratio limiting part fixes the duty ratio to the predetermined value.

17. The electric power steering apparatus according to Claim 15, wherein the duty ratio limiting part fixes the duty ratio to the predetermined value when it is judged that the duty ratio limiting condition is satisfied in the state that:

the change rate of the driving current of the electric motor is not less than the threshold value; and
the absolute value of a detected driving current value of the electric motor is not less than a predetermined value is continuously maintained for a predetermined time.

18. The electric power steering apparatus according to Claim 15, wherein the duty ratio limiting part limits the duty ratio to the predetermined value when it judged that:

the duty ratio limiting condition is satisfied; and
a sign of the change rate of the driving current of the electric motor coincides with a sign of the detected driving current value.

**19.** The electric power steering apparatus according to Claim 15, further comprising:

a motor angular velocity detecting unit which detects a motor angular velocity of the electric motor,

wherein the duty ratio limiting part fixes the duty ratio to the predetermined value when:

it is judged that the duty ratio limiting condition is satisfied; and
the motor angular velocity detected by the motor angular velocity detecting unit is not less than a predetermined value.

**20.** The electric power steering apparatus according to Claim 15, further comprising:

a motor angular velocity detecting unit which detects a motor angular velocity of the electric motor,

wherein the duty ratio limiting part fixes the duty ratio to the predetermined value when it is judged that:

the duty ratio limiting condition is satisfied; and
the motor angular velocity detected before a predetermined time by the motor angular velocity detecting unit is not less than a predetermined value.

**21.** The electric power steering apparatus according to Claim 15, further comprising:

a motor angular velocity detecting unit which detects a motor angular velocity of the electric motor,

wherein the duty ratio limiting part fixes the duty ratio to the predetermined value when it judged that:

the duty ratio limiting condition is satisfied; and
a sign of a change rate of the motor angular velocity coincides with a sign of the detected driving current value.

**22.** The electric power steering apparatus according to Claim 15, wherein the duty ratio limiting part releases the duty ratio fixed to the predetermined value when a predetermined time passes after the duty ratio is fixed to the predetermined value.

**23.** The electric power steering apparatus according to Claim 22, wherein the predetermined time for releasing the duty ratio fixed to the predetermined value is set based on the motor angular velocity.

**24.** The electric power steering apparatus according to Claim 15, further comprising:

a vehicle speed detecting unit which detects a vehicle speed,

wherein the duty ratio limiting part comprises a threshold value setting unit which increases the threshold value for judging the steering limit in accordance with an increase of the vehicle speed detected by the vehicle speed detecting unit.

**25.** The electric power steering apparatus according to Claim 15,
wherein the motor control part comprises an inverter which is driven by the pulse-width modulating signal so as to supply motor current to the electric motor, and
wherein the duty ratio limiting part controls one of an upper arm and a lower arm of the inverter to be an ON state at the same time when the duty ratio limiting condition is satisfied, so as to control into an electromagnetic brake mode.

**26.** The electric power steering apparatus according to Claim 15, wherein the torque transmitting member of the steering mechanism comprises a middle shaft which is connected to a joint having a yoke manufactured by a press molding method.

27. The electric power steering apparatus according to Claim 15, wherein the steering mechanism comprises a buffer member on a rack stroke end of a steering gear.

28. An electric power steering apparatus comprising:

a steering torque detection part which detects a steering torque inputted to a steering mechanism which steers a steering road wheel;
a current command value calculation part which calculates a current command value on the basis of at least the steering torque detected by the steering torque detection part;
an electric motor which generates a steering assist torque applied on a steering shaft of the steering mechanism;
a motor control part which controls the electric motor by a pulse-width modulating signal on the basis of the current command value; and
a self-aligning torque detection part which detects a self-aligning torque inputted to the steering shaft from the steering road wheel,

wherein the motor control part comprises:

a self-aligning torque change rate detection part which calculates a change rate of the self-aligning torque detected by the self-aligning torque detection part; and
a duty ratio limiting part which judges that a duty ratio limiting condition is satisfied when the change rate of the self-aligning torque is not less than a threshold value for judging a steering limit, and

wherein the duty ratio limiting part fixes a duty ratio of the pulse-width modulating signal to a predetermined value for limiting a torque transmitted to a torque transmitting member between the steering shaft of the steering mechanism and the steering road wheel when the duty ratio limiting condition is satisfied.

29. The electric power steering apparatus according to Claim 28, wherein the duty ratio limiting part judges that the duty ratio limiting condition is satisfied when:

the change rate of the self-aligning torque is not less than the threshold value; and
an absolute value of the self-aligning torque detected by the self-aligning torque detection part is not less than a predetermined value,
then, the duty ratio limiting part fixes the duty ratio to the predetermined value.

30. The electric power steering apparatus according to Claim 28, wherein the duty ratio limiting part fixes the duty ratio to the predetermined value when it is judged that the duty ratio limiting condition is satisfied in the state that:

the change rate of the self-aligning torque is not less than the threshold value; and
the absolute value of the self-aligning torque detected by the self-aligning torque detection part is not less than a predetermined value is continuously maintained for a predetermined time.

31. The electric power steering apparatus according to Claim 28, wherein the duty ratio limiting part fixes the duty ratio to the predetermined value when it judged that:

the duty ratio limiting condition is satisfied; and
a sign of the change rate of the self-aligning torque coincides with a sign of the calculated self-aligning torque value.

32. The electric power steering apparatus according to Claim 28, further comprising:

a motor angular velocity detecting unit which detects a motor angular velocity of the electric motor,

wherein the duty ratio limiting part fixes the duty ratio to the predetermined value when it is judged that:

the duty ratio limiting condition is satisfied; and
the motor angular velocity detected by the motor angular velocity detecting unit is not less than a predetermined value.

**33.** The electric power steering apparatus according to Claim 28, further comprising:

a motor angular velocity detecting unit which detects a motor angular velocity of the electric motor,

wherein the duty ratio limiting part fixes the duty ratio to the predetermined value when it is judged that:

the duty ratio limiting condition is satisfied; and
the motor angular velocity detected before a predetermined time by the motor angular velocity detecting unit is not less than a predetermined value.

**34.** The electric power steering apparatus according to Claim 28, further comprising:

a motor angular velocity detection part which detects a motor angular velocity of the electric motor; and
a rotational angular acceleration detection part which detects a rotational angular acceleration of the electric motor,

wherein the self-aligning torque detection part is configured to calculate the self-aligning torque on the basis of:

the steering torque detected by the steering torque detection part;
the current command value calculated by the current command value calculation part;
the motor angular velocity detected by the motor angular velocity detection part; and
the rotational angular acceleration detected by the rotational angular acceleration detection part.

**35.** The electric power steering apparatus according to Claim 32, further comprising:

a rotational angular acceleration detection part which detects a rotational angular acceleration of the electric motor,

wherein the self-aligning torque detection part is configured to calculate the self-aligning torque on the basis of:

the steering torque detected by the steering torque detection part;
the current command value calculated by the current command value calculation part;
the motor angular velocity detected by the motor angular velocity detection part; and
the rotational angular acceleration detected by the rotational angular acceleration detection part.

**36.** The electric power steering apparatus according to Claim 28, wherein the duty ratio limiting part releases the duty ratio fixed to the predetermined value when a predetermined time passes after the duty ratio is fixed to the predetermined value.

**37.** The electric power steering apparatus according to Claim 36, wherein the predetermined time for releasing the duty ratio fixed to the predetermined value is set based on the motor angular velocity.

**38.** The electric power steering apparatus according to Claim 28, further comprising:

a vehicle speed detecting unit which detects a vehicle speed,

wherein the duty ratio limiting part comprises a threshold value setting unit which increases the threshold value for judging the steering limit in accordance with an increase of the vehicle speed detected by the vehicle speed detecting unit.

**39.** The electric power steering apparatus according to Claim 28,
wherein the motor control part comprises an inverter which is driven by the pulse-width modulating signal so as to supply motor current to the electric motor, and
wherein the duty ratio limiting part controls one of an upper arm and a lower arm of the inverter to be an ON state at the same time when the duty ratio limiting condition is satisfied, so as to control into an electromagnetic brake mode.

**40.** The electric power steering apparatus according to Claim 28, wherein the torque transmitting member of the steering mechanism comprises a middle shaft which is connected to a joint having a yoke manufactured by a press molding method.

**41.** The electric power steering apparatus according to Claim 28, wherein the steering mechanism comprises a buffer member on a rack stroke end of a steering gear.

# FIG. 1

## FIG. 2

EP 1 864 886 A2

# FIG. 3

EP 1 864 886 A2

## FIG. 4

## FIG. 5

## FIG. 6

MOTOR TORQUE Tma

→ TIME

## FIG. 7

TORQUE

L2

L1

→ TIME

FIG. 8

FIG. 9

# FIG. 10

START TIMER
INTERRUPTION PROCESS

READ VEHICLE SPEED V — S31

CALCULATE THRESHOLD VALUE
$\Delta$ Tth BASED ON VEHICLE SPEED V
WITH REFERENCE TO THRESHOLD
VALUE CALCULATION TABLE — S32

MEMORIZE CALCULATED
THRESHOLD VALUE $\Delta$ Tth IN
PREDETERMINED MEMORY REGION — S33

RETURN

# FIG. 11

THRESHOLD VALUE $\Delta$ Tth

$\Delta$ Tth1

VEHICLE SPEED V

FIG. 12

## FIG. 13

EP 1 864 886 A2

# FIG. 14

( START STEERING ASSIST CONTROL PROCESS )

S0

END CONTACT
DETECTION FLAG F1="1" ?

YES → S15

GENERATE FIXED DUTY RATIO
OF INVERTER GATE SIGNAL

NO

S1

READ DETECTED VALUES OF VARIOUS SENSORS

CALCULATE STEERING ASSIST COMMAND VALUE
IM* WITH REFERENCE TO CONTROL MAP — S2

CALCULATE MOTOR ANGULAR VELOCITY $\omega$ BY
DIFFERENTIATING MOTOR ROTATION ANGLE $\theta$ — S3

CALCULATE MOTOR ANGULAR ACCELERATION $\alpha$ BY
DIFFERENTIATING MOTOR ANGULAR VELOCITY $\omega$ — S4

CALCULATE CONVERGENT COMPENSATION VALUE Ic
Ic=Kv · $\omega$ — S5

CALCULATE INERTIA COMPENSATION VALUE Ii
BASED ON MOTOR ANGULAR VELOCITY $\alpha$ — S6

CALCULATE SELF-ALIGNING TORQUE SAT — S7

CALCULATE STEERING ASSIST COMPENSATION VALUE IM*'
IM*' = IM*+Ic+Ii+SAT — S8

CALCULATE TARGET CURRENT Id* AND Iq*
BY d-q-AXIS COMMAND VALUE — S9

CALCULATE MOTOR CURRENT COMMAND VALUES
Iu*, Iv*, AND Iw* BY TWO-TO-THREE PHASE
CONVERSION PROCESS — S10

S11

CALCULATE CURRENT DEVIATIONS Δ Iu, Δ Iv, AND Δ Iw
BY SUBTRACTING MOTOR CURRENT VALUES Iu, Iv, AND Iw
FROM CURRENT COMMAND VALUES Iu*, Iv*, AND Iw*

S12

CALCULATE VOLTAGE COMMAND VALUES Vu, Vv, AND Vw
BY PERFORMING PI CONTROL PROCESS TO CURRENT
DEVIATIONS Δ Iu, Δ Iv, AND Δ Iw

S13

GENERATE INVERTER GATE SIGNAL
BASED ON VOLTAGE COMMAND VALUES
Vu, Vv, AND Vw BY PULSE-WIDTH
MODULATION PROCESS

OUTPUT INVERTER GATE SIGNAL
TO INVERTER 64

( RETURN ) S14

# FIG. 15

```
            ┌─────────────────────────┐
            │   START STEERING LIMIT   │
            │ POSITION DETECTION PROCESS│
            └─────────────────────────┘
                        │
                        ▼
            ┌─────────────────────────┐
            │  READ MOTOR CURRENT VALUES│ ──S21
            │       Iu, Iv, AND Iw     │
            └─────────────────────────┘
                        │
                        ▼
            ┌─────────────────────────┐
            │    CALCULATE Iq BY       │
            │   PERFORMING THREE-TO-TWO│ ──S22
            │  PHASE CONVERSION PROCESS│
            └─────────────────────────┘
                        │
                        ▼
            ┌─────────────────────────┐
            │ CALCULATE MOTOR TORQUE Tma│
            │ BASED ON q-AXIS CURRENT Iq│ ──S23
            │ AND MOTOR ANGULAR        │
            │   ACCELERATION α         │
            └─────────────────────────┘
                        │
                        ▼
            ┌─────────────────────────┐
            │CALCULATE MOTOR TORQUE    │
            │CHANGE RATE ΔTma BY       │ ──S23'
            │DIFFERENTIATING MOTOR     │
            │TORQUE Tma                │
            └─────────────────────────┘
                        │
                        ▼            S24
                      ╱────────────────╲        NO
                    ╱  ΔTma ≥ ΔTth?     ╲────────────┐
                     ╲                  ╱            │
                      ╲────────────────╱             │
                        │ YES    S25                 │ S26
                        ▼                            ▼
                  ┌──────────┐              ┌──────────┐
                  │  F = "1" │              │  F = "0" │
                  └──────────┘              └──────────┘
                        │                            │
                        │◄───────────────────────────┘
                        ▼
                  ┌──────────┐
                  │  RETURN  │
                  └──────────┘
```

## FIG. 16

CONTROLLER 15

14 STEERING TORQUE SENSOR — T
16 VEHICLE SPEED SENSOR — V

21 STEERING ASSIST TORQUE COMMAND VALUE CALCULATOR — Im*

38 — Im**'

33 CONVERGENT COMPENSATOR — Icom — 37 Ic
36 INERTIA COMPENSATOR — Ii
35 SAT ESTIMATION AND FEEDBACK SECTION — SAT

32 ANGULAR ACCELERATION CALCULATOR — α
31 ANGULAR VELOCITY CALCULATOR — ω

22

60 MOTOR CURRENT DETECTOR — Im
70 TERMINAL VOLTAGE DETECTOR — Vm

61 — + / −
62 PI CURRENT CONTROLLER — ΔI — V*
67 MOTOR TORQUE DETECTOR — Tma
68 DIFFERENTIAL CIRCUIT — ΔTma
69 SELECTION SIGNAL GENERATING SECTION — SL
65 PULSE-WIDTH MODULATION SECTION
71 H-BRIDGE CIRCUIT

64 / 64b / 64c
64a DUTY RATIO CALCULATOR — DB
DL

24

12 M
777

FIG. 17

FIG. 18

FIG. 19

EP 1 864 886 A2

FIG. 20

# FIG. 21

```
┌─────────────────────────┐
│      START TIMER        │
│  INTERRUPTION PROCESS   │
└─────────────────────────┘
            │
            ▼
┌─────────────────────────┐
│  READ VEHICLE SPEED V   │────S31
└─────────────────────────┘
            │
            ▼
┌─────────────────────────┐
│ CALCULATE THRESHOLD VALUE│
│ Δ Ith BASED ON VEHICLE SPEED V │────S32
│ WITH REFERENCE TO THRESHOLD │
│ VALUE CALCULATION TABLE │
└─────────────────────────┘
            │
            ▼
┌─────────────────────────┐
│    MEMORIZE CALCULATED   │
│  THRESHOLD VALUE  Δ Ith IN │────S33
│ PREDETERMINED MEMORY REGION │
└─────────────────────────┘
            │
            ▼
      ┌───────────┐
      │  RETURN   │
      └───────────┘
```

# FIG. 22

# FIG. 23

EP 1 864 886 A2

FIG. 24

EP 1 864 886 A2

# FIG. 25

```
┌─────────────────────────────┐
│  START STEERING LIMIT       │
│  POSITION DETECTION PROCESS │
└─────────────────────────────┘
              │
              ▼
┌─────────────────────────────┐
│  READ MOTOR CURRENT VALUES  │ ── S121
│  Iu, Iv, AND Iw             │
└─────────────────────────────┘
              │
              ▼
┌─────────────────────────────┐
│  CALCULATE q-AXIS CURRENT Iq│
│  BY THREE-TO-TWO PHASE      │ ── S122
│  CONVERSION PROCESS         │
└─────────────────────────────┘
              │
              ▼
┌─────────────────────────────┐
│  CALCULATE CURRENT CHANGE   │
│  RATE ΔIq BY DIFFERENTIATING│ ── S123
│  q-AXIS CURRENT Iq          │
└─────────────────────────────┘
              │
              ▼
            S124
         ╱─────────╲
        ╱  ΔIq ≥    ╲   NO
        ╲  ΔIth?    ╱ ──────┐
         ╲─────────╱        │
            │ YES           │
            │  S125         │ S126
            ▼               ▼
      ┌──────────┐    ┌──────────┐
      │ F = "1"  │    │ F = "0"  │
      └──────────┘    └──────────┘
            │               │
            │◄──────────────┘
            ▼
      ┌──────────┐
      │  RETURN  │
      └──────────┘
```

# FIG. 26

EP 1 864 886 A2

FIG. 27

## FIG. 28

FIG. 29

FIG. 30

FIG. 31

# FIG. 32

# FIG. 33

START STEERING LIMIT
POSITION DETECTION PROCESS

READ SELF-ALIGNING
TORQUE SAT ～S221

CALCULATE SELF-ALIGNING
TORQUE CHANGE RATE
$\Delta$ SAT BY DIFFERENTIATING
SELF-ALIGNING TORQUE SAT ～S222

S223

$\Delta$ SAT $\geq$ $\Delta$ Tth?

NO

YES S224 S225

F = "1" F = "0"

RETURN

FIG. 34

EP 1 864 886 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001253356 A
- JP 2001030933 A

- JP 2000335431 A